# EUROPEAN PATENT APPLICATION

(11) **EP 4 773 048 A1**
(43) Date of publication of application: **08.07.2026**
(21) Application number: 25315003.1
(22) Date of filing: 02.01.2025
(51) Int. Cl.: G06N 10/70, G06N 10/40, G06N 3/08

(54) **METHOD AND SYSTEM FOR PHOTONIC ERROR MITIGATION USING PARTITIONS**

(71) Applicant: Quandela, 91300 Massy (FR)
(72) Inventor: Wein, Stephen, 22300 Lannion (FR); Annoni, Emilio, 92220 Bagneux (FR); Mezher, Rawad, 91120 Palaiseau (FR); Mills, James, Edinburgh, EH12 5AY (GB)
(74) Representative: Yes My Patent

(57) **Abstract**

The present invention relates to a method 100 and system for error mitigation in photonic quantum information processing. The method 100 involves generating 111 partially distinguishable photons, measuring 121 at least one computation result *R*(*̅p̅*̅) that is dependent on at least one probability distribution *̅p̅*̅ produced by N partially distinguishable photons, uniquely labeling and partitioning the photons, estimating probability distributions of cells within chosen partitions, and combining 131 these distributions to construct a new approximation of the noise-impacted distribution. The error-mitigated distribution is then computed by subtracting the approximated distribution from the original one.

## Description

### Introduction

The present invention relates to the technical field of quantum information processing, particularly to methods and systems for mitigating errors in computation results that depend on the measurement probability distribution produced by a photonic quantum device.

### Background

Quantum information processing is a useful aspect of quantum technology, which aims to exploit quantum effects to perform tasks that are beyond the capability of classical information processing. However, quantum effects are very susceptible to noise that can corrupt the computation result of a quantum device to the point where it is no longer useful. In the noisy intermediate scale quantum (NISQ) era where the size and quality of quantum devices are not yet large enough to implement active error correction during an algorithm, it is very useful to refine the output of noisy devices to obtain more accurate solutions. Quantum error mitigation refers to a variety of techniques that are employed to effectively reduce errors in various quantum platforms, such as superconducting circuits and trapped ions, through the clever use of data acquisition and classical post-processing. However, error sources in photonic quantum information processing can be distinct, necessitating specialized methods for mitigation. Significant error sources in quantum information processing include photon loss, multi-photon noise, and partial distinguishability.

Zero noise extrapolation (ZNE) is a common error mitigation technique that alters device parameters to purposefully increase the noise rate impacting the computation. The continuous deviation away from the ideal solution is then modeled to extrapolate the noise-free output. Although applicable for losses and partial distinguishability, ZNE requires precise control over noise variation, which is challenging in practice for photon distinguishability, necessitates numerous configurations to accurately capture noise trends, and can lead to a large bias between the estimated noise-free output and the true noise-free output. Despite advancements in error mitigation techniques for quantum information processing, there remains a need to improve their efficiency and applicability across various platforms. It is therefore an objective of the present invention to overcome at least partially the challenges associated with existing error mitigation methods, particularly in the context of photonic quantum information processing.

### Summary

The present technology has been designed to overcome at least some drawbacks present in prior art solutions.

According to an aspect, the present invention relates to a method for error mitigation in photonic quantum information processing using single photons. This method is designed to be implemented by at least one system and comprises preferably several phases: production, measurement, processing, and preferably application.

According to an embodiment, during the production phase, partially distinguishable photons are generated using a quantum information processing module with a photon generation sub-module and a photon source. These photons are advantageously intended for use in computations.

According to an embodiment, the measuring phase involves measuring the probability distribution of the partially distinguishable photons at the output of the quantum information processing module. This measurement is preferably carried out using the quantum information processing module with a measuring sub-module containing at least one photon detector. At least a portion of the detection results, i.e. the relevant detection results, are then advantageously recorded. According to an embodiment, the measuring phase comprises a step of uniquely labeling, each partially distinguishable photon is labeled classically, and the photons are considered to enter the measuring sub-module in various partitions. Preferably, a partition is defined as a unique grouping of all photon labels, with each partition composed of cells. Advantageously, each cell contains a group of photons, preferably a smaller group of photons.

According to an embodiment, the measuring phase comprises a step of estimating probability distributions of photons at the output of the quantum information processing module, using either the quantum information processing module or a classical information processing module. Preferably, each predetermined group of photons of a chosen partition are made completely distinguishable from the rest of the photons involved in the computation. This separation can be accomplished by altering the photons' spatial trajectory, frequency (color), polarization, or arrival time. The fact that photons are made fully distinguishable drastically reduces the need for high-precision control over the device parameters. For each chosen partition of photons, the probability distribution associated with the modified groups of photons is estimated advantageously by considering only the input photons in that cell of the chosen partition.

According to an embodiment, in the processing phase, all the probability distributions associated with the chosen partition are combined by the classical information processing module to construct at least one partition computation result that approximates at least partially the noise impacting the system, i.e. the computation result obtained with partially distinguishable photons. This is achieved preferably by computing the partition probability distribution by performing a convolution between the cell probability distributions associated with each cell in the chosen partition and using it to estimate a partition computation result. The error-mitigated computation result is then advantageously computed by subtracting the partition computation result from the original computation result, with a weight depending on the chosen partition.

According to an aspect, the present invention relates to a method for mitigating errors in photonic quantum information processing, said method being configured to be implemented by at least one system, said method comprising at least the following phases:
a. a production phase comprising at least the following step:
   - Generating, using at least one quantum information processing module comprising at least one photon generation sub-module comprising at least one photon-source, partially distinguishable photons, preferably designed to be used for at least one computation;
b. a measuring phase comprising at least the following steps, these following steps being configured to be executed in any order:
   - Measuring, using said quantum information processing module comprising a measuring sub-module comprising at least one photon detector, at least one computation result *R*(*̅p̅*̅) that is dependent on at least one probability distribution *̅p̅*̅ produced by N partially distinguishable photons at an output of said quantum information processing module where;
      - *̅p̅*̅ denotes a collection of detection probabilities *pₙ* wherein each probability corresponds to the probability of observing a unique pattern of detection outcomes n;
      - *n* denotes a list of integers indicating the number of photons measured by at least said photon detector of said measuring sub-module;
   - Uniquely labeling, using a classical processing information module, each partially distinguishable photon of the *N* partially distinguishable photons and considering one or more partitions of the *N* photons, where;
      - A partition is denoted by Λ, and is written as a unique grouping of all photon labels;
      - each partition is composed of *m* groups of photons, and each group is called a cell denoted *c;*
   - Estimating, using said quantum information processing module or said classical information processing module, at least one probability distribution of *N - K* photons at the output of the quantum information processing module, where a predetermined group of *K* photons are deterministically separated at the input of the quantum information processing module, said estimating step comprising:
      - Choosing at least one partition Λ of the input photons containing at least one cell *c;*
      - For each chosen partition:
         - Estimating the cell probability distribution *p̅_{c}* associated with at least one cell c by considering only the input photons in said cell *c* of the chosen partition Λ.
c. a processing phase comprising at least the following steps:
   - Combining, by said classical information processing module, all the cell probability distributions *p̅_{c}* associated with the chosen partition A to construct at least one partition computation result *R*(*̅p̅*̅_{Λ}) that approximates at least partially the noise impacting the computation result *R*(*̅p̅*̅), comprising, for each chosen partition:
      - Computing, using the classical information processing module, the partition probability distribution *̅p̅*̅_{Λ} by performing a convolution between the cell probability distributions associated with each cell in the chosen partition A: *̅p̅*̅_{Λ} *= p̅*_{*c*1} ** p̅*_{*c*2} *** ... * *p̅_{cₘ},* m being the number of cells of the chosen partition Λ;
   - Correcting, by said classical information processing module, the computation result *R*(*̅p̅*̅) using at least one partition computation result *R*(*̅p̅*̅_{Λ}), comprising:
      - Computing, by a weighted subtraction of at least one partition computation result *R*(*̅p̅*̅_{Λ}) from the computation result *R*(*̅p̅*̅), the error-mitigated computation result *R'* = *w*ₒ*R*(*̅p̅*̅) - Σ_{Λ} *w*_{Λ}*R*(*̅p̅*̅_{Λ}) where the correction weight *w*₀ and each partition correction weight *w*_{Λ} are predetermined real or complex values that form the error mitigation parameters.
d. Preferably, an application phase comprising the following step:
   - using the error-mitigated computation result R' in place of the computation result *R*(*̅p̅*̅) as the output of at least one photonic quantum information processing procedure.

According to an embodiment, during the production phase, partially distinguishable photons are generated using a quantum information processing module. This module comprises a photon generation sub-module, which in turn comprises at least one photon-source. These photons are preferably designed for use in computations.

According to an embodiment, the measuring phase involves measuring the computation result that is dependent on the probability distribution produced by N partially distinguishable photons at the output of the quantum information processing module. The detection probabilities of said probability distribution, labelled by the list of integers indicating the number of photons measured, are then obtained using the quantum information processing module... Each photon is uniquely labeled using a classical processing information module, and one or more partitions of these N photons are considered. A partition is denoted by Λ, and is written as a unique grouping of all photon labels. Each partition is composed of m groups of photons, with each group called a cell, denoted c. For example, six photons can be labelled (1, 2, 3, 4, 5, 6). One example of a partition with three cells is (1, 2)(3, 5, 6)(4).

Preferably, for error mitigation purposes, at least one probability distribution of N-K photons is estimated using either the quantum information processing module or the classical information processing module. Here, K photons are deterministically separated at the input. This estimation process involves choosing at least one partition Λ containing at least one cell and estimating the associated cell probability distribution by considering only the input photons within that cell of the chosen partition.

Advantageously, in the processing phase, all the cell probability distributions associated with the at least one chosen partition Λ are combined to construct a new N-photon computation result probability distribution that approximates at least partially the noise impacting the original computation result. This can be achieved by performing a convolution between the cell probability distributions associated with each cell in the chosen partition A.

For example, two cell probability distributions can be convoluted to give a new partial partition probability distribution, which is a collection of probabilities.

The computation result can then be corrected using at least one partition computation result. This correction involves a weighted subtraction of the partition computation results from the original computation result.

Preferably, in the application phase, the error-mitigated computation result is used in place of the original computation result as the output of at least one photonic quantum information processing procedure. This ensures that the final results are more accurate and reliable due to the effective error mitigation techniques employed.

The technical advantages of this method include improved accuracy in quantum information processing by reducing errors caused by noise through effective error mitigation techniques. By utilizing a combination of quantum and classical processing, the method can adapt to various noise scenarios and provide more reliable results. Unlike most standard error mitigation procedures, the method may be configured to be hierarchical. This means that the accuracy can be improved by increasing the number of unique partitions considered in the method. For systems following some well-behaved noise models, including the well-known orthogonal bad-bit model of partial distinguishability, this error mitigation technique reduces, and preferably exactly eliminates. all errors due to partial distinguishability when all possible partitions are used in the error mitigation procedure.

According to another aspect, the present invention relates to a system for error mitigation in photonic quantum information processing, comprising:
a. a quantum information processing module comprising:
   - a photon generation sub-module, said photon generation sub-module comprising at least one photon-source, said photon generation sub-module being configured to generate partially distinguishable photons, preferably designed to be used for at least one computation;
   - an output configured to deliver partially distinguishable photons;
   - a measuring sub-module comprising at least one photon detector, said measuring sub-module being configured to measure at least one computation result *R*(*̅p̅*̅) that is dependent on at least one the probability distribution *̅p̅*̅ produced by *N* partially distinguishable photons at the output of said quantum information processing module;
   The quantum information processing module being configured to:
   - estimate at least one probability distribution of *N - K* photons at the output of the quantum information processing module;
   - Choose at least one partition Λ of the input photons containing at least one cell *c;*
   - Estimate the probability distribution *p̅_{c}* associated with at least one cell *c* by considering only the input photons in said cell c of the chosen partition Λ;
b. a classical information processing module, configured to:
   - uniquely label each partially distinguishable photon of the *N* partially distinguishable photons;
   - estimate at least one probability distribution of *N* - *K* photons at the output of the quantum information processing module;
   - Choose at least one partition Λ of the input photons containing at least one cell *c;*
   - Estimate the cell probability distribution *p̅_{c}* associated with at least one cell *c* by considering only the input photons in said cell *c* of the chosen partition Λ;
   - combine all the cell probability distributions *p̅_{c}* associated with the chosen partition A to construct at least one partition computation result *R*(*̅p̅*̅_{Λ}) that approximates at least partially the noise impacting the computation result *R*(*̅p̅*̅);
   - compute the partition probability distribution *̅p̅*̅_{Λ} by performing a convolution between the cell probability distributions associated with each cell in the chosen partition: *̅p̅*̅_{Λ} = *̅p̅*̅_{*c*1} * *̅p̅*̅_{*c*2} * ... * *p̅_{cₘ},* m being the number of cells of the chosen partition Λ;
   - Preferably, convolute two probability distributions *p̅_{c}* and *p̅_{c'}* to give a new probability distribution *p̅_{cc'}* = *p̅_{c}* * *p̅_{c'}* that is a collection of probabilities *p_{cc',n"}* = Σ_{*n*,*n'*|*n*+*n*'=*n*"}*p*_{*c*,*n*} × *p_{c',n'};*
   - Correct a computation result *R*(*̅p̅*̅) using at least one partition computation result *R*(*̅p̅*̅_{Λ}), by computing, by a weighted subtraction of at least one partition computation result *R*(*̅p̅*̅_{Λ}) from the computation result *R*(*̅p̅*̅), the error-mitigated computation result *R*' *= w*₀*R*(*̅p̅*̅) - Σ_{Λ} *w*_{Λ}*R*(*̅p̅*̅_{Λ}) where the correction weight *w*₀ and each partition correction weight *w*_{Λ} are predetermined real or complex values that form the error mitigation parameters.

According to an embodiment, the photon generation sub-module comprises at least one photon-source configured to generate partially distinguishable photons. These photons are preferably designed for use in quantum computations. The output delivers these partially distinguishable photons, while the measuring sub-module comprises at least one photon detector that measures at least one computation result dependent on the probability distribution produced by N partially distinguishable photons at the output of the quantum information processing module.

Preferably, the quantum information processing module is further configured to estimate at least one probability distribution of N-K photons at its output. It can choose at least one partition Λ of the input photons, containing at least one cell c, and estimate the probability distribution associated with that cell by considering only the input photons in said cell c of the chosen partition A.

Advantageously, the classical information processing module is configured to uniquely label each partially distinguishable photon. It can also estimate at least one probability distribution of N-K photons at the output of the quantum information processing module, choose at least one partition Λ containing at least one cell c, and estimate the cell probability distribution associated with that cell by considering only the input photons in said cell c of the chosen partition Λ.

Preferably, the classical information processing module combines all the cell probability distributions associated with the chosen partition Λ to construct at least one partition computation result that approximates, at least partially, the noise impacting the computation result. It computes the new partition probability distribution by performing a convolution between the cell probability distributions associated with each cell in the chosen partition. It can also convolute two probability distributions to give a new probability distribution which is a collection of probabilities.

According to an embodiment, to correct the computation result, the classical information processing module uses at least one partition computation result. It computes the error-mitigated computation result by performing a weighted subtraction of at least one partition computation result from the computation result.

Advantageously, this system offers several technical advantages in photonic quantum information processing. By estimating probability distributions of photons at its output and choosing partitions containing multiple cells, it can approximate noise and construct new photon probability distributions that partially account for this noise. This approach enables more accurate and efficient error mitigation, ultimately leading to more reliable quantum information processing.

Moreover, the use of classical information processing to uniquely label each partially distinguishable photon and estimate probability distributions at the output of the quantum information processing module allows for a more efficient and accurate error mitigation process. The system's ability to convolute cell probability distributions associated with each cell in the chosen partition enables it to capture the impact of noise on the entire set of cells within that partition, effectively accounting for correlations between photons.

In summary, this system for error mitigation in photonic quantum information processing offers technical advantages such as approximating noise and constructing new probability distributions, accounting for correlations between photons by considering multiple cells within a chosen partition, These features contribute to improved accuracy and efficiency in the error mitigation process, resulting in more reliable quantum information processing.

According to an aspect, the present invention relates to a method for error mitigation in photonic quantum information processing, said method being configured to be implemented by at least one system, said method comprising at least the following phases:
➢ Production phase comprising at least the following step:
   o Generating, using at least one quantum information processing module comprising at least one photon generation sub-module comprising at least one photon-source, partially distinguishable photons, preferably designed to be used for at least one computation;
➢ Measuring phase, said measuring phase comprising at least the following steps, these following steps being configured to be executed in any order:
   o Measuring, using the quantum information processing module comprising a measuring sub-module comprising at least one photon detector, the probability distribution produced by partially distinguishable photons at an output of said quantum information processing module where:
      ▪ *̅p̅*̅ denotes a collection of detection probabilities *pₙ* wherein each probability corresponds to the probability of observing a unique pattern of detection outcomes n;
      ▪ n denotes a list of integers indicating the number of photons measured by at least one photon detector of said measuring sub-module;
   o Uniquely labeling, using a classical processing information module, each partially distinguishable photon of the *N* partially distinguishable photons and considering one or more partitions of the *N* photons, where:
      ▪ a partition is denoted by Λ, and is written as a unique grouping of all photon labels;
      ▪ each partition is composed of *m* groups of photons, and each group is called a cell, denoted *c;*
   o Estimating, using said quantum information processing module or said classical information processing module, probability distributions of *N - K* photons at the output of the quantum information processing module, where K photons are deterministically removed at the input in a predetermined order, said estimating step comprising:
      ▪ Choosing at least one partition Λ of the input photons containing at least one cell c;
      ▪ For each chosen partition:
         - Estimating the probability distribution *p̅_{c}* associated with at least one cell c by considering only the input photons in said cell c of the chosen partition Λ.
➢ Processing phase comprising the following steps:
   o Combining, by the classical information processing module, all the probability distributions *p̅_{c}* associated with the chosen partition Λ to construct a new *N-*photon probability distribution *̅p̅*̅_{Λ} that approximates at least partially a noise impacting *̅p̅*̅, comprising:
      ▪ Computing the new probability distribution by convoluting the probability distributions associated with each cell in the chosen partition: *̅p̅*̅_{Λ} = *̅p̅*̅_{*c*1} * *̅p̅*̅_{*c*2} * ... * *p̅_{cₘ}*;
      ▪ Convoluting two probability distributions *p̅_{c}* and *p̅_{c'}* to give a new probability distribution *p̅_{cc'}* = *p̅_{c} * p̅_{c'}* that is a collection of probabilities *p_{cc',n"}* = Σ_{*n*,*n*'|+*n'*=}*_{n"}p_{c,n}* × *p_{c',n'};*
      ▪ Computing the error-mitigated probability distribution *p̅'* by subtracting the reconstructed *N*-photon probability distribution from the original *N*-photon distribution *̅p̅*̅ to get *p̅'* = *̅p̅*̅ - *w*_{Λ} *̅p̅*̅_{Λ} where the weight *w*_{Λ} is a real value that depends on the chosen partition Λ.

According to an embodiment, the present invention relates to a method for error mitigation in photonic quantum information processing. This method is designed to be implemented by at least one system.

According to an embodiment, during the production phase, partially distinguishable photons are generated using a quantum information processing module with a photon generation sub-module and a photon source. These photons are preferably designed for use in computations. This step allows for the creation of photonic qubits, which are the building blocks for quantum information processing.

According to an embodiment, the measuring phase involves measuring the probability distribution produced by partially distinguishable photons at the output of a quantum information processing module using a measuring sub-module with one or more photon detectors. The collection of detection probabilities and the list of integers indicating the number of photons measured are then obtained. This process enables the determination of the state of the quantum system, which can be used for further error mitigation steps.

According to an embodiment, each partially distinguishable photon is uniquely labeled using a classical processing information module, and one or more partitions of the photons are considered. A partition is a unique grouping of all photon labels, composed of groups called cells. This step allows for the organization and analysis of the data obtained during the measuring phase.

According to an embodiment, probability distributions of photons at the output of the quantum information processing module are estimated using either the quantum information processing module or the classical information processing module. Photons are deterministically separated from the input in a predetermined order before estimation. By choosing a partition containing at least one cell and estimating the associated probability distribution, more accurate results can be obtained by considering only the input photons within that cell of the chosen partition.

According to an embodiment, during the processing phase, all the probability distributions associated with the cells of the chosen partition are combined to construct a new multi-photon probability distribution that approximates at least partially the noise impacting the system. This is achieved by computing the new probability distribution through convolution of the probability distributions associated with each cell in the chosen partition and subtracting it from the original multi-photon distribution to obtain the error-mitigated probability distribution. The weight depends on the chosen partition, allowing for flexibility in the error mitigation process.

The technical advantages of this method include improved accuracy in quantum information processing by reducing errors caused by noise through effective error mitigation techniques. By utilizing a combination of quantum and classical processing, the method can adapt to various noise scenarios and provide more reliable results. Additionally, the ability to choose partitions and cells allows for targeted and adaptive error mitigation to maximize the benefit while minimizing the overhead from data acquisition, further enhancing the overall performance of the quantum information processing system.

According to an embodiment, the present invention refers to a computer-implemented system for error mitigation in photonic quantum information processing. This system is configured to implement the present invention. This system comprises a quantum information processing module, which comprises a photon generation sub-module responsible for generating partially distinguishable photons and an output that delivers these photons. A measuring sub-module is also present, consisting of at least one photon detector to measure the probability distribution generated by the partially distinguishable photons at the system's output. The quantum information processing module is designed to estimate probability distributions of photons at its output, partition the input photons into cells, and estimate the probability distribution associated with each cell by considering only the input photons within that cell.

According to an embodiment, a classical information processing module is integrated into the system as well, which uniquely labels each partially distinguishable photon, can estimate probability distributions at the output of the quantum information processing module, partitions the input photons, and estimates the probability distribution associated with each cell using partially the same methodology as the quantum information processing module. Preferably, the classical information processing module combines all the probability distributions associated with the chosen partition to construct a new probability distribution that approximates the noise impacting the original probability distribution. It then computes the error-mitigated probability distribution by subtracting the reconstructed probability distribution from the original one, where the weight is a real value that depends on the chosen partition.

According to an aspect, the present invention relates to a system for error mitigation in photonic quantum information processing, comprising:
- A quantum information processing module comprising:
   o a photon generation sub-module, said photon generation sub-module comprising at least one photon-source, said photon generation sub-module being configured to generate partially distinguishable photons, preferably designed to be used for at least one computation;
   o An output configured to deliver partially distinguishable photons;
   o A measuring sub-module comprising at least one photon detector, said measuring sub-module being configured to measure the probability distribution *̅p̅*̅ produced by N partially distinguishable photons at the output of said quantum information processing module;
   The quantum information processing module being configured to:
   o estimate probability distributions of *N - K* photons at its output;
   o choose at least one partition Λ of the input photons containing at least one cell *c*;
   o Estimate the probability distribution *p̅_{c}* associated with at least one cell *c* by considering only the input photons in said cell c of the chosen partition Λ;
- a classical information processing module, configured to:
   o label, preferably uniquely label, each partially distinguishable photon of the N partially distinguishable photons;
   o choose at least one partition Λ of the input photons containing at least one cell *c*;
   o estimate the probability distribution *p̅_{c}* associated with at least one cell *c* by considering only the input photons in said cell c of the chosen partition Λ;
   o combine all the probability distributions *p̅_{c}* associated with the chosen partition Λ to construct a new *N* -photon probability distribution *̅p̅*̅_{Λ} that approximates at least partially a noise impacting the probability distribution *̅p̅*̅;
   o compute the new probability distribution by convoluting the probability distributions associated with each cell in the chosen partition: *̅p̅*̅_{Λ} = *̅p̅*̅_{*c*1} * *̅p̅*̅_{*c*2} * ... * *p̅_{cₘ}*;
   o convolute two probability distributions *p̅_{c}* and *p̅_{c'}* to give a new probability distribution *p̅_{cc'}* = *p̅_{c}* * *p̅_{c'}* that is a collection of probabilities *p_{cc',n"}* = Σ_{*n*,*n*'|+*n'*=*n"*}Pc,n × *p_{c',n'}*;
   o compute the error-mitigated probability distribution *p̅'* by subtracting the reconstructed *N* -photon probability distribution *̅p̅*̅_{Λ} from the original *N* - photon distribution *̅p̅*̅ to get *̅p̅*̅' = *̅p̅*̅ - *w*_{Λ} *̅p̅*̅_{Λ} where the weight *w*_{Λ} is a real value that depends on the chosen partition Λ.

According to an embodiment, the present invention relates to a computer-implemented system for error mitigation in photonic quantum information processing. This system comprises a quantum information processing module and a classical information processing module. The quantum information processing module includes a photon generation sub-module that generates partially distinguishable photons, an output that delivers these photons, and a measuring sub-module that measures the probability distribution produced by the partially distinguishable photons at the output.

The quantum information processing module is further configured to estimate probability distributions of photons at its output, choose a partition of the input photons containing at least one cell, estimate the probability distribution associated with at least one cell by considering only the input photons in that cell of the chosen partition, and repeat this process for multiple cells within the chosen partition. This approach allows for error mitigation by approximating the noise impacting the probability distribution and constructing a new photon probability distribution that partially accounts for this noise.

The classical information processing module is responsible for uniquely labeling each partially distinguishable photon, and can also be configured to estimate probability distributions of photons at the output of the quantum information processing module, to choose a partition of the input photons containing at least one cell, and to estimate the probability distribution associated with that cell by considering only the input photons in that cell of the chosen partition.

The classical information processing module is configured to combine all the probability distributions associated with the chosen partition to construct a new photon probability distribution and computes the error-mitigated probability distribution by subtracting the reconstructed photon probability distribution from the original one.

One technical advantage of this system lies in its ability to mitigate errors in photonic quantum information processing by approximating noise and constructing new probability distributions. By choosing partitions and estimating probability distributions for cells within these partitions, the system can effectively account for noise and improve the overall accuracy of the quantum information processing.

Another technical advantage is the use of classical information processing to label each partially distinguishable photon and estimate probability distributions at the output of the quantum information processing module. This allows for a more efficient and accurate error mitigation process, as the classical information processing can be implemented using well-established techniques and algorithms.

Furthermore, the system's ability to choose partitions containing multiple cells within them enables the error mitigation process to account for correlations between photons, which is useful in quantum information processing. By considering the probability distributions associated with each cell in the chosen partition and computing a new probability distribution by convoluting these distributions, the system can effectively capture the impact of noise on the entire set of cells within the chosen partition.

In summary, this computer-implemented system for error mitigation in photonic quantum information processing offers several technical advantages, including its ability to approximate noise and construct new probability distributions, and account for correlations between photons by considering multiple cells within a chosen partition. These features contribute to improved accuracy and efficiency in the error mitigation process, ultimately leading to more reliable quantum information processing.

According to an embodiment, the present invention relates to a computer product program designed for error mitigation in photonic quantum information processing. This program is engineered to be executed by at least one computer-implemented system, thereby enabling the implementation of any of the previously described methods for error mitigation in this field.

In more detail, the invention encompasses a computer product program that focuses on minimizing errors encountered during the processing of quantum information using photonic technology. When implemented on a suitable computing platform, the program carries out the present invention, thereby enhancing the overall accuracy and reliability of photonic quantum information processing systems.

According to an embodiment, the present invention relates to a computer product program for error mitigation in photonic quantum information processing which, when executed by at least one computer-implemented system, executes the method according to the present invention.

According to an embodiment, the present invention relates to a non-volatile memory comprising at least one computer program product. The non-volatile memory is designed to retain data even in the absence of power. The computer program product is encoded as instructions or code that can be executed by a processor when accessed from the non-volatile memory.

According to an embodiment, the present invention relates to a non-volatile memory comprising at least one computer program product according to the present invention.

Before providing below a detailed review of embodiments of the technology, some optional characteristics that may be used in association or alternatively will be listed hereinafter:
According to an example, the present invention comprises, a step of repeating said measuring phase with a new partition where the probability distribution *̅p̅*̅ is replaced by the error mitigated probability distribution *̅p̅*̅' and where the probability distribution *p̅'_{c}* associated with said cell c is computed using said quantum information processing module or said classical information processing module.

The inclusion of error mitigation in the measuring phase significantly enhances the reliability and accuracy of the measurement results. By replacing the initial probability distribution with an error-mitigated one, the method becomes more robust against potential errors that may arise during the measurement process. This is particularly important in quantum systems where errors are inherent due to the fragile nature of quantum states.

According to an example, the at least one photon of the predetermined group of K photons is deterministically separated and thus destroyed using at least one shutter module, said shutter module comprising at least one shutter.

According to an example, at least one photon of the predetermined group of K photons is separated and configured to be measured using said quantum information processing module or another quantum information processing module comprising a measuring sub-module comprising at least one photon detector.

According to an example, the combining step comprises, for each chosen partition, after the computing step, convoluting two cell probability distributions *p̅_{c}* and *p̅_{c'}* to give a partial partition probability distribution *p̅_{cc'}* = *p̅_{c}* * *p̅_{c'}* that is a collection of probabilities *p_{cc',n"}* = Σ_{*n*,*n*'|+*n'*=}*_{n"}p*_{*c*,*n*} × *p_{c',n'}*;

According to an example, the K photons are deterministically removed using at least one shutter module, said shutter module comprising at least one shutter.

The use of a shutter module in the photon removal process enhances selectivity, enabling precise control over which photons are removed and when.

According to an example, the photons measured by said measuring sub-module during the measuring phase are measured, preferably within a predetermined time, by said detector.

According to an example, the photon detector comprises a threshold detection unit, said threshold detection unit is configured to send at least one classical data indicating the detection of at least one photon when the state of the photon detector exceeds a predetermined threshold.

According to an example, the photon detector is a threshold detector and is configured to send at least one classical data indicating the detection of at least one photon.

According to an example, the photon detector comprises a photon number resolving detection unit, said photon number resolving detection unit is configured to send at least one classical data indicating the detection of at least one photon when the measure of the photon detector exceeds a predetermined number. Preferably, the classical data either gives the exact number of photons detected or allows to discriminate between more than two scenarios of number detection.

According to an example, said predetermined order is dynamically determined.

According to an example, the generating step of the production phase comprises at least:
- generating at least one excitation pulse to excite the photon generation sub-module;
- producing a string of n photons by controlling the sequence of excitation pulses to produce periodically photons or not produce photons.

According to an example, the excitation pulse is generated using a laser and/or an electrical excitation component.

According to an example, producing a string of *n* photons comprises generating at least one string of pulses.

According to an example, controlling the sequence of excitation pulses using said photon generation sub-module further comprises a demultiplexing step of said string of photons into n streams of one single photon using a demultiplexing device.

According to an example, controlling the sequence of excitation pulses using said photon generation sub-module further comprises a generating step of at least one cell comprising at least one photon from said n streams of one single photon using a plurality of shutters.

According to an example, the production phase comprises a demultiplexing step to generate multiple strings of at least one photon, using at least one demultiplexing device configured to organize at least one string of photons into multiple strings of photons, each string of photons comprising at least one photon

According to an example, the at least one single-photon source comprises :
- at least one laser; and/or
- at least one electrical excitation component.

According to an example, the production phase comprises, before producing at least one photon, a step of controlling at least one laser using said classical information processing module.

According to an example, the production phase comprises, before producing at least one photon, a step of controlling at least one electrical excitation component using said classical information processing module.

According to an example, the measuring step, using said quantum information processing module, comprises at least the following sub-steps:
- applying a linear optical transformation on at least one said partially distinguishable photons using a linear optical transformation device comprising at least one interferometer;
- measuring the presence of photons at the output of said linear optical transformation device using said detector module;
- sending the output from said detector module to said classical information processing module.

According to an example, the present invention comprises, using said linear optical transformation device:
- Generating interaction between photons wherein each photon comes from different strings; or
- Generating interaction between photons wherein each photon comes from the same string, preferably using a time-delayed loop; or
- Generating interaction between photons wherein each photon comes from the same string and/or from different strings using at least one quantum memory.

This allows for the manipulation of distinct photon groups, potentially increasing the complexity and versatility of optical transformations. By employing techniques like time-delayed loops or quantum memories, the interaction between identical photons can be controlled and tailored to specific applications, such as quantum state engineering. This technique introduces a temporal delay in the optical path of one or more photon groups before they interact. By manipulating the duration and phase of this delay, the interaction between the photons can be precisely controlled, leading to tailored optical transformations. This is particularly useful for applications where precise control over the interaction is essential, such as in quantum state engineering.

Quantum memories enable the storage and retrieval of quantum states, allowing for the manipulation and processing of photons even when they are not present in the optical system. This is particularly useful in applications where it is necessary to process photons that arrive asynchronously or to perform operations on previously generated quantum states. By employing quantum memories based on atomic vapor, cold atoms, or doped materials, this invention can offer significant advantages in terms of flexibility, scalability, and potential for integration with other quantum technologies.

According to an example, the present invention further comprises a calibration phase, this calibration phase comprising at least the following steps:
e. Performing simulation, using said classical information processing module, for calculating at least one theoretical reference computation result *R*_{ref}; and
f. Determining a value for at least one error mitigation parameter of the error mitigation parameters based on comparing the error-mitigated computation result R' to the theoretical reference computation result *R*_{ref}, using said classical information processing module.

According to an example, the determining step of the calibration phase comprises using machine learning techniques to determine at least one error mitigation parameter by:
o Considering the theoretical reference computation result *R*_{ref};
o Considering the error-mitigated computation result R' parametrized by said error mitigation parameters, preferably unfixed;
o Defining at least one cost function between said two computation results; and
o Minimizing said cost function to determine a value for each parameter of said error mitigation parameters.

According to an example, said linear optical transformation device is a photonic integrated chip.

According to an example, said linear optical transformation device comprises at least one interferometer.

According to an example, the present invention comprises, during the processing phase, the following steps:
- performing simulation, using said classical information processing module, for calculating the theoretical distribution;
- determining a value for each parameter of at least one set of parameters for error mitigation based on the measured data and the calculated theoretical distribution, using said classical information processing module.

During the processing phase, performing simulation using a classical information processing module to calculate the theoretical distribution offers several technical advantages. This step allows for the prediction of ideal or optimal conditions based on mathematical models and physical laws. By comparing the measured data with the calculated theoretical distribution, any discrepancies can be identified and addressed, thereby improving overall accuracy and precision in the system.

For cell probability distributions with few photons, using classical information processing can be much faster than using quantum information processing. Thus, by using quantum information processing for cells containing many photons, and classical information processing for cells containing few photons, the overall rate of computation can be minimized.

According to an example, when a cell comprises a number of photons equal or higher than a predetermined threshold, the present invention is configured to use the quantum information processing module to process said cell, and when a cell comprises a number of photons lower than the predetermined threshold, the present invention is configured to use the classical information processing module to process the cell.

Determining values for each parameter of at least one set of parameters for error mitigation based on measured data and the calculated theoretical distribution is another significant technical advantage. This approach enables the system to adapt to real-world conditions by optimizing parameters in response to measurement data. By using the classical information processing module to analyze both the measured data and the theoretical distribution, the system can effectively minimize errors even if the system's alignment varies over time, and thus improve overall performance and ensure computational stability.

According to an example, the determining step comprises using machine learning techniques to determine said set of parameters by:
- considering the theoretical distribution;
- considering the mitigated distribution parameterized by said set of parameters, preferably unfixed;
- defining at least one cost function between said two distributions; and
- minimizing said cost function to determine a value for each parameter of said set of parameters.

Defining a cost function between the theoretical and mitigated distributions provides a quantifiable measure of the difference between the two. Minimizing this cost function allows for the determination of the optimal set of parameters that minimize the difference, resulting in improved system performance.

According to an example, the present invention comprises, during the processing phase, a step of using said determined set of parameters for at least one error-mitigated computation using classical information processing module.

According to an example, the present invention comprises the use of a classical computer to learn a predetermined set of parameters for error mitigation based on the theoretical distribution and the measured N-photon distributions.

According to an example, the present invention comprises the application of the error mitigation technique to boson sampling distributions to improve their quality.

According to an example, the present invention further comprises the application of the error mitigation technique to any quantities derived from boson-sampling-like distributions, including linear-optical gates for gate-based computing and variational quantum algorithms.

According to an example, the present invention further comprises the application of the error mitigation technique to multi-qubit quantum gates and circuits.

According to an example, the present invention comprises at least one demultiplexing device.

According to an example, the measuring sub-module comprise a linear optical transformation device.

According to an example, the optical transformation device comprises at least one photonic integrated circuit.

According to an example, the optical transformation device comprises optical components.

According to an example, said measuring sub-module is configured to measure the photons within a predetermined time by said detector.

According to an example, the photon generation sub-module is configured to:
- Generate at least one excitation pulse to excite the photon-source; and
- Produce a string of n photons by controlling the sequence of excitation pulses to produce periodically photons or not produce photons

According to an example, the present invention comprises a laser configured to generate the excitation pulse.

According to an example, the present invention comprises an electrical excitation component configured to generate the excitation pulse.

According to an example, the photon generation sub-module is configured to generate at least one string of pulses to produce at least one string of photon.

According to an example, the photon generation sub-module is configured to control the sequence of excitation pulses.

According to an example, the photon generation sub-module comprises a demultiplexing device configured to demultiplex said string of photons into n streams of one single photon.

According to an example, the present invention comprises at least one shutter module and wherein said shutter module is configured to deterministically remove photons.

According to an example, said shutter module comprises at least one shutter.

According to an example, the shutter module is configured to generate at least one cell comprising at least one photon from said n streams of one single photon.

According to an example, the shutter module comprises a plurality of shutters configured to generate at least one cell comprising at least one photon from said n streams of one single photon.

According to an example, the present invention comprises at least one demultiplexing device configured to organize at least one string of photons into multiple strings of photons, each string of photons comprising at least one photon.

According to an example, the present invention comprises at least one demultiplexing device configured to generate multiple strings of at least one photon.

According to an example, the at least on single-photon source comprises:
- at least one laser; and/or
- at least one electrical excitation component.

According to an example, the present invention comprises at least one laser and wherein the classical information processing module is configured to control the at least one laser.

According to an example, the present invention comprises at least one electrical excitation component and the classical information processing module is configured to control the at least one electrical excitation component.

According to an example, the present invention comprises at least one linear optical transformation device configured to apply a linear optical transformation on at least one said partially distinguishable photons.

According to an example, the optical transformation device comprises at least one interferometer.

According to an example, the said detector module is configured to measure the presence of photons at least one output of the linear optical transformation device.

According to an example, the classical information processing module is configured to receive the output from said detector module.

According to an example, said linear optical transformation device is configured to:
- Generate interaction between photons wherein each photon comes from different strings; and/or
- Generate interaction between photons wherein each photon comes from the same string; and/or
- Generate interaction between photons wherein each photon comes from the same string and/or from different strings.

According to an example, said linear optical transformation device comprises a time-delayed loop device, said time-delayed loop device being configured to Generate interaction between photons wherein each photon comes from the same string.

According to an example, the time-delayed loop device comprises at least one of:
- at least one time-delayed optical fiber; or
- at least one of wave-guide embedded on at least one chip.

According to an example, said linear optical transformation device comprises at least one quantum memory, said at least one at least one quantum memory being configured to generate interaction between photons wherein each photon comes from the same string and/or from different strings.

According to an example, said at least one at least one quantum memory comprises at least one among: an atomic vapor device, a cold atoms device, or a doped material device.

According to an example, said linear optical transformation device is a photonic integrated chip.

According to an example, wherein said classical information processing module is configured to:
- perform simulation for calculating the theoretical distribution and/or theoretical computation result; and
- determine a value for each parameter of at least one set of parameters for error mitigation based on the measured data and the calculated theoretical distribution and/or theoretical computation result.

According to an example, the present invention comprises at least one machine learning module configured to determine said set of parameters by being configured to:
- consider the theoretical distribution and/or theoretical computation result;
- consider the mitigated distribution and/or computation result parameterized by said set of parameters, preferably unfixed;
- define at least one cost function between said two distributions and/or said two computation results; and
- minimize said cost function to determine a value for each parameter of said set of parameters.

According to an example, said classical information processing module is configured to use said determined set of parameters for at least one error-mitigated computation.

According to an example, the present invention comprises a classical computer configured to learn a predetermined set of parameters for error mitigation based on the theoretical distribution and the measured N-photon distributions.

According to an example, the present invention is configured to apply the error mitigation technique to boson sampling distributions to improve their quality.

According to an example, the present invention is configured to apply the error mitigation technique to any quantities derived from boson-sampling-like distributions, including linear-optical gates for gate-based computing, variational quantum algorithms, and quantum machine learning algorithms.

According to an example, the present invention is configured to apply the error mitigation technique to multi-qubit quantum gates and circuits.

According to an example, the present invention further comprises at least one shutter module configured to separate at least one of the predetermined group of K photons.

### Brief description of the drawings

For a better understanding of the present technology, as well as other aspects and further features thereof, reference is made to the following description which is to be used in conjunction with the accompanying drawings, where:
FIG. 1: Figure 1 illustrates a sequence of steps of the method as described in an embodiment of the present invention.
FIG. 2: Figure 2 illustrates a system according to an embodiment of the present invention.

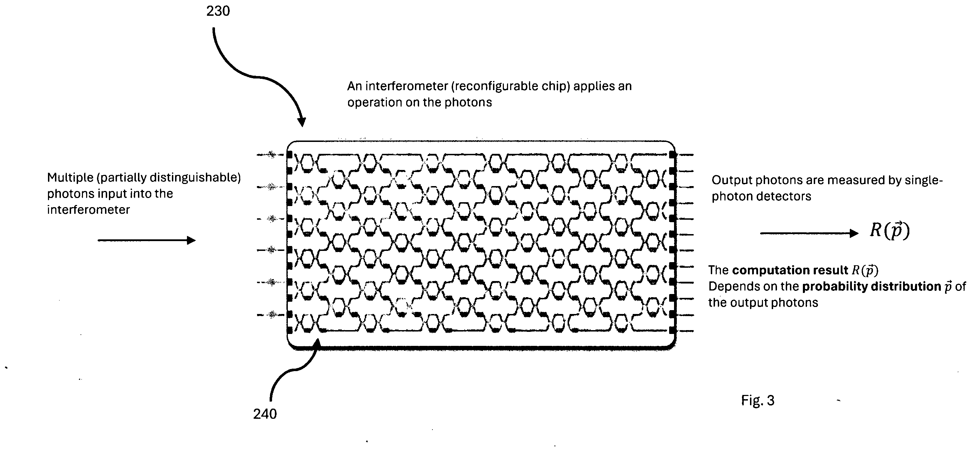

FIG. 3: Figure 3 illustrates an interferometer according to an embodiment of the present invention.
FIG. 4: Figure 4 illustrates the decomposition of an imperfect input into a weighted mixture of partitions according to an embodiment of the present invention.
FIG. 5: Figure 5 illustrates the theoretical and noisy statistics based on probability distributions according to an embodiment of the present invention.
FIG. 6: Figure 6 illustrates the dominant noise according to an embodiment of the present invention.
FIG. 7: Figure 7 illustrates the labelling and separation of one partition into two cells of fully indistinguishable input states of fewer photons according to an embodiment of the present invention.
FIG. 8: Figure 8 illustrates the measurement of cell probability distributions to approximate the noise according to an embodiment of the present invention.
FIG. 9: Figure 9 illustrates the combination of measurements to calculate a partition probability distribution according to an embodiment of the present invention.
FIG. 10: Figure 10 illustrate the calculation of a corrected computation result according to an embodiment of the present invention.
FIG. 11: Figure 11 illustrate how much closer the corrected computation result is to the reference computation result, according to an embodiment of the present invention.
FIG. 12: Figure 12 illustrates the significant decrease in gate errors as demonstrated by the simulation results according to an embodiment of the present invention.
FIG. 13: Figure 13 illustrates a setup of a system according to an embodiment of the present invention.
FIG. 14: Figure 14 illustrates a second setup of a system according to an embodiment of the present invention.
FIG. 15: Figure 15 illustrates a third setup of a system according to an embodiment of the present invention.

### Detailed description

In the context of the present invention, "Quantum computing" refers to a field of computation that exploits quantum mechanical phenomena to perform computations using quantum bits called qubits. It is necessary to introduce a qubit, which is a basic unit of quantum information. A qubit represents a physical system that may be in two different states, generally denoted by |0〉 and |1〉, as well as in a superposition of those two states, e.g., (|0)+|1))/√2.

As well known by the skilled person in the relevant art (see for example "Quantum entanglement", Ryszard Horodecki et al., Rev. Mod. Phys. 81, 865), an entangled state corresponds to at least two systems, for example two particles, sharing one wave function, and where the determination of a property of one of the particles determines a property of the other particle.

As well known by the skilled person in the relevant art, unitary gates represent invertible transformations in quantum mechanics, they preserve the wave function's norm and thus conserve probabilities of measurement outcomes. Mathematically, they can be represented as square complex matrices, verifying that the complex conjugates of their transpose matrices (Hermitian conjugates) are also their inverse matrices. In quantum computing, unitary gates act on the qubits' states, and they are fundamental building blocks for quantum circuits. In particular, single qubit gates are unitary gates acting on a single qubit independently of other qubits' state, and entangling gates are unitary gates acting on at least two qubits and that cannot be separated into separated single qubit gates.

In the context of the present invention, a "gate" or "quantum gate" may refer to a fundamental operation applied to one or more qubits that changes their quantum state. These gates operate according to the principles of quantum mechanics, such as superposition, entanglement, and interference. Mathematically, quantum gates are represented as unitary matrices, meaning their operations are reversible and preserve the total probability of the system. When applied to qubits, they transform the state vector in the complex Hilbert space, enabling quantum computations. Quantum gates can come in various types, each with specific roles. Single-qubit gates act on individual qubits to manipulate their states. Two-qubit gates, on the other hand, operate on pairs of qubits and are useful for generating entanglement.

In the context of the present invention, a "Gate error" may refer to inaccuracies during the execution of quantum gates, caused by factors like environmental disturbances, qubit fabrication imperfections, or control mechanism errors, for example. These errors may impact the fidelity and reliability of quantum computations.

In the context of the present invention, "Gate fidelity" may refer to the accuracy of quantum gates in performing their tasks, comparing the ideal operation with the actual implementation.

In the present description, the words "data", "piece of information" and "information" can be used for the same purpose, i.e. one data can be or comprise information or a piece of information, and a piece of information can be or comprise a data.

In the present description, a processor may be any logic processing unit, such as one or more digital processors, microprocessors, central processing units, graphics processing units, application-specific integrated circuits, programmable gate arrays, programmed logic units, digital signal processors, network processors, and the like.

Classical data can include processor executable instructions that, when executed by a processor cause the processor to control, initialize, write to, manipulate, read out, and/or otherwise send data to/from a quantum module. Classical data can also include data used or obtained by the operation of the present invention. Classical data can include data associated with, e.g., created by, referred to, changed by, a processor executing processor-executable instructions, such as, control instructions.

Classical data can include data used or obtained by the operation of the present invention. Classical data can include data associated with, e.g., created by, referred to, changed by, a processor executing processor-executable instructions, such as, control instructions.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers. It can be said that a database is a logically ordered collection of structured data kept electronically in a computer system

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, "device" or "unit" may refer to any computer hardware that is capable of running software appropriate to the relevant task at hand. Thus, some (non-limiting) examples of devices include personal computers (desktops, laptops, netbooks, etc.), smartphones, and tablets, as well as network equipment such as routers, switches, and gateways. It should be noted that a device acting as a device in the present context is not precluded from acting as a server to other devices. The use of the expression "a device" does not preclude multiple devices being used in receiving/sending, carrying out or causing to be carried out any task or request, or the consequences of any task or request, or steps of any method described herein.

In the present description, a storage device is at least one non-transitory or tangible storage device. A storage device can, for example, include one or more volatile storage devices, for instance random access memory, and one or more non-volatile storage devices, for instance read only memory, flash memory, magnetic hard disk, optical disk, solid state disk, and the like.

In the present description, a storage device can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.

In the context of the present specification, the expression "computer readable medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, the expression "component" or "module" is meant to include software (appropriate to a particular hardware context) that is both necessary and sufficient to achieve the specific function(s) being referenced.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first module" and "third module" is not intended to imply any particular order, type, chronology, hierarchy or ranking (for example) of/between the module, nor is their use (by itself) intended imply that any "second module" must necessarily exist in any given situation. Further, as is discussed herein in other contexts, reference to a "first" element and a "second" element does not preclude the two elements from being the same actual real-world element. Thus, for example, in some instances, a "first" module and a "second" module may be the same software and/or hardware, in other cases they may be different software and/or hardware.

The functions of the various elements shown in the figures, including any functional block labeled as a "processor" or a "processing module" or a "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present invention, the processor may be a general-purpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included. In some embodiments of the present invention, the processor can be a quantum processor comprising a plurality of qubits.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

In the present description, one module can comprise several modules, one module can be formed of several modules.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc. In some instances, well-known methods associated with artificial intelligence, machine learning and/or neural networks, have not been shown or described in detail to avoid unnecessarily obscuring descriptions of the disclosed implementations. In some instances, well-known structures associated with semiconductor and/or optical devices and/or quantum computing and/or quantum information processing, such as targets, substrates, lenses, waveguides, shields, filters, lasers, processor-executable instructions, have not been shown or described in detail to avoid unnecessarily obscuring descriptions of the disclosed implementations.

The examples and conditional language recited herein are principally intended to aid the reader in understanding the principles of the present invention and not to limit its scope to such specifically recited examples and conditions. It will be appreciated that those skilled in the art may devise various arrangements which, although not explicitly described or shown herein, nonetheless embody the principles of the present invention and are included within its spirit and scope.

Furthermore, as an aid to understanding, the following description may describe relatively simplified implementations of the present invention. As persons skilled in the art would understand, various implementations of the present invention may be of a greater complexity.

In some cases, what are believed to be helpful examples of modifications to the present invention may also be set forth. This is done merely as an aid to understanding, and, again, not to define the scope or set forth the bounds of the present invention. These modifications are not an exhaustive list, and a person skilled in the art may make other modifications while nonetheless remaining within the scope of the present invention. Further, where no examples of modifications have been set forth, it should not be interpreted that no modifications are possible and/or that what is described is the sole manner of implementing that element of the present invention.

Moreover, all statements herein reciting principles, aspects, and implementations of the present invention, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present invention. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

With these fundamentals in place, we will now consider some non-limiting examples to illustrate various implementations of aspects of the present technology.

According to an embodiment, the present invention relates to a method and system for mitigating errors in the output probability distribution and/or computation result of a photonic quantum information processing system, particularly those due to partial distinguishability of input photons.

According to an embodiment, the smart approach taken in this invention is to approximate the noise and then subtract it from the noisy computation result, preferably from the noisy distribution, to obtain a computation result, preferably a distribution, closer to the ideal/theoretical computation result, preferably distribution. Advantageously, the noise is approximated by measuring many different partitions of the imperfect input state for a fixed computation, which is accomplished by separating and/or blocking some photons from the others. The partition distributions obtained in this way can be recombined to get a total approximation of the noise.

Advantageously, to mitigate for partial distinguishability, it is also possible to exploit information contained in discrete distributions where only N-K photons are detected. However, unlike Photon Recycling techniques, these N-K distributions are explicitly measured by reducing the number of photons at the input rather than looking at outcomes for N input photons but where k photons were lost. Separating and/or removing photons is much smarter to do than continuously varying the photon distinguishability, and hence it is much more practical than ZNE.

In a broad aspect, and according to an embodiment, there are N such N-1 photon distributions where one photon is separated and/or removed at the input of a measuring module. By combining these N-1 photon distributions, it is possible to construct a partition computation result, preferably a new N-photon distribution, that approximates the noise impacting the measured N-photon distribution. Importantly, the parameters needed to perform this construction are independent of the computation and only dependent on the noise of the photons. Thus, once these parameters are known (either by characterization or machine learning, for example), the mitigation technique can be applied repeatedly to any computation involving N photons, without using ZNE.

This error mitigation method of the present invention can be applied to improve the quality of measured boson sampling distributions and more generally any quantum computation results. Tests show that it can consistently reduce the error with a sampling overhead that scales linearly with the number of photons. This translates to a reduction of the level of indistinguishability needed to reach a quantum advantage regime. The method can also be applied to any quantities that are derived from boson-sampling-like distributions, which includes linear-optical gates for gate-based computing, variational quantum algorithms, and quantum machine learning algorithms.

According to an embodiment, the present invention consists of a boson-sampling system where single photons are input into a linear-optical interferometer and detected by single-photon detectors. For example, by placing photon shutters at the input of the linear-optical interferometer that are preferably connected to a classical computer, the error mitigation method is applied to controllably turn on and off photons to learn the noise patterns and subtract it from the desired output distribution.

According to an embodiment, a source of photon is configured to produce imperfect photons, also called partially distinguishable photons, designed to perform computations. In the context of this invention, imperfect photons or partially distinguishable photons or partially indistinguishable photons refer to photons that are not perfectly distinguishable from one another based on their properties such as polarization, phase, or other characteristics. This is in contrast to ideal photons which are considered perfectly indistinguishable.

According to an embodiment, a shutter or also called a photon shutter, is a device configured to block the path of one or more photons.

According to an embodiment, a linear-optical interferometer is a device configured to apply an optical transformation on the input single-photon states.

According to an embodiment, a single-photon detector is a device configured to measure the presence of photons (or number of photons) in one or several paths.

According to an embodiment, a classical computer can be configured:
- to control at least one of:
   o the photon shutters,
   o the linear-optical interferometer
   and
- to receive the output from the single-photon detectors;
- to perform the simulation for the ideal distribution;
- learn the set of parameters for error mitigation.

According to an embodiment, an interferometer is an optical device that allows for the generation of interferences between at least two modes of light and can be a beam splitter, Mach-Zehnder interferometer, or Michelson interferometer.

According to an embodiment, a phase shifter is an operation on a single mode of photonic integrated chip, which includes series of reconfigurable Mach-Zehnder interferometers, phase shifters, swaps (two waveguides that cross each other), and beam splitters.

Preferably, once learning is complete, the classical computer, also called a classical information processing module, performs the error mitigation on the output by controlling the Photon Shutters and post-processing using the learned parameters.

According to an embodiment an excitation pulse is a periodic laser pulse or electrical pulse used to trigger the single photon source, i.e. to make or attempt to make the single photon source generate a single photon.

According to an embodiment, a shutter can be configured to block the path of one or more photons directly if placed after the single-photon sources or indirectly by blocking the excitation pulse used to trigger the single photon source; In this latter case, it can be implemented as a pulse picker.

According to an embodiment, the single-photon source is configured to generate or attempt to generate single photons when triggered by at least one laser pulse.

According to an embodiment, a sequential entangler is configured to entangle an incoming stream of single photons into a graph state. It can comprise a time-delay loop device or a quantum memory, for example.

According to an embodiment, MBQC Architecture or Fusion Network is a system that implements an algorithm using one or more graph states as inputs.

According to an embodiment, the measurement outcomes of all components in the architecture are returned to the classical computer. Preferably, the classical computer is configured to control the shutter to remove individual photons from the input state, to measure the corresponding output distribution and to use post-processing to mitigate partial distinguishability errors.

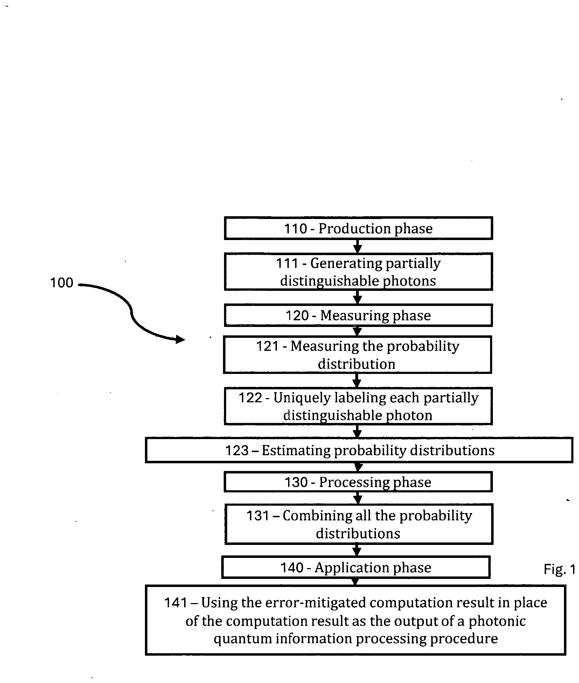

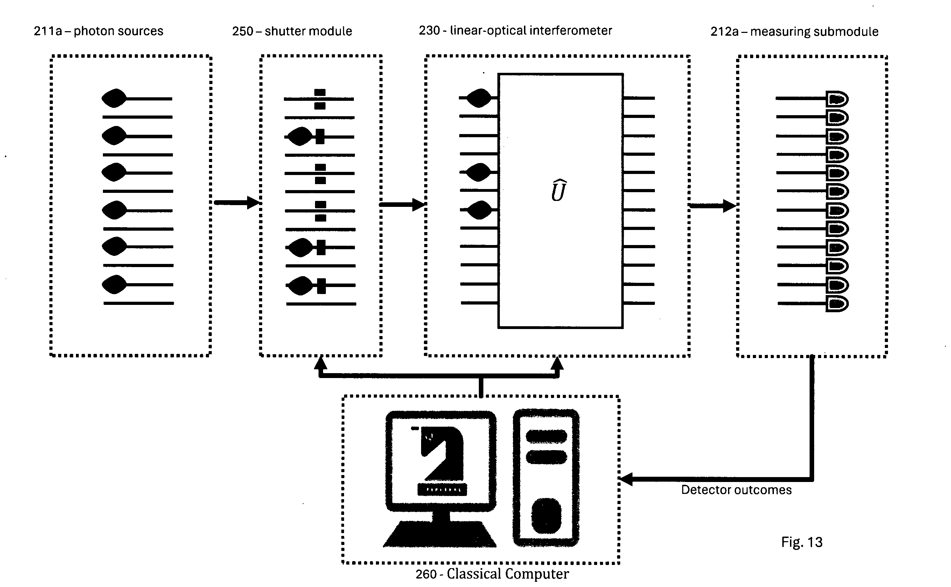

According to an embodiment of the present invention, and as illustrated by figures 1, 2, 13, 14 and 15, a method 100 and system 200 are provided for error mitigation in photonic quantum information processing. The method 100 is configured to be implemented by at least one system 200.

According to an embodiment, the method 100 comprises at least the following phases:
a. A production phase 110;
b. A measuring phase 120;
c. A processing phase 130; And
d. Optionally, an application phase 140.

According to an embodiment, during the production phase 110, partially distinguishable photons 10 are generated using a quantum information processing module. These photons 10 are preferably designed for use in at least one computation.

According to an embodiment, the production phase 110 comprises generating 111, using the quantum information processing module 210, partially distinguishable photons 10, preferably designed to be used for at least one computation. According to an embodiment, said quantum information processing module 210 comprises at least one photon generation sub-module 211. Preferably, said photon generation sub-module comprises at least one photon-source 211a.

According to an embodiment, the measuring phase 120 involves several steps, which can be executed in any order. Preferably, the measuring phase 120 comprises a step of measuring 121 at least one computation result that is dependent on at least one probability distribution produced by the partially distinguishable photons 10 at the output of the quantum information processing module 210, using said quantum information processing module 210 with a measuring sub-module 212 that comprises at least one photon detector 212a.

According to an embodiment, the measuring step 121 comprises measuring, using the quantum information processing module 210, at least one computation result *R*(*̅p̅*̅) that is dependent on the probability distribution *̅p̅*̅ produced by N partially distinguishable photons 10 at least one output of said quantum information processing module 210, where:
- *̅p̅*̅ denotes a collection of detection probabilities *pₙ* wherein each probability corresponds to the probability of observing a unique pattern of detection outcomes *n;* and
- *n* denotes a list of integers indicating the number of photons 10 measured by at least one photon detector 212a of said measuring sub-module 212.

Preferably, the quantum information processing module 210 comprises a measuring sub-module 212. Advantageously, the measuring sub-module 212 comprises at least one photon detector 212a.

According to an embodiment, the measuring phase 120 comprises a step of uniquely labeling 122 each partially distinguishable photon 10 and considering one or more partitions 20 of the photons 10. Preferably, a partition 20 is denoted as Λ. Each partition Λ is composed of cells, denoted as c. For example, six photons can be labelled (1, 2, 3, 4, 5, 6), and one example of a partition with three cells could be (1, 2)(3, 5, 6)(4).

According to an embodiment, the measuring phase 120 comprises uniquely labeling 122, using a classical processing information module 220, each partially distinguishable photon 10 of the *N* partially distinguishable photons 10 and considering one or more partitions Λ of the *N* photons, where:
- A partition is denoted by Λ, and is written as a unique grouping of all photon labels;
- each partition is composed of m groups of photons, and each group is called a cell, denoted c;

According to an embodiment, the measuring phase 120 comprises an estimating step 123. Preferably, during the estimating step 123, at least one probability distribution of photons at the output of the quantum information processing module 210 is estimated using either the quantum information processing module 210 and/or the classical information processing module 220. This is accomplished advantageously by deterministically separating and/or removing a predetermined group of K photons 10 from the input, preferably in a predetermined order, and estimating the cell probability distribution associated with each cell c in the chosen partition Λ by considering only the input photons 10 within that cell c.

Preferably, the estimating step 123 comprises:
- Choosing at least one partition Λ of the input photons containing at least one cell c;
- For each chosen partition: Estimating the cell probability distribution *p̅_{c}* associated with at least one cell *c* by considering only the input photons in said cell *c* of the chosen partition Λ.

According to an embodiment, in the processing phase 130, all the cell probability distributions associated with the chosen partition are combined by the classical information processing module 220 to construct at least one partition computation result *R*(*̅p̅*̅_{Λ}) that approximates at least partially a noise impacting the original N-photon distribution: Preferably the partition computation result *R*(*̅p̅*̅_{Λ}) can be a new N-photon probability distribution. This is accomplished by preferably computing the partition computation result *R*(*̅p̅*̅_{Λ}) by convoluting the probability distributions associated with each cell in the chosen partition and subtracting the reconstructed N-photon probability distribution from the original N-photon distribution to obtain the error-mitigated probability distribution.

Advantageously, the combining step comprises, for each chosen partition, after the computing step, a step of convoluting two cell probability distributions *p̅_{c}* and *p̅_{c'}* to give a partial partition probability distribution *p̅_{cc'}* = *p̅_{c} * p̅_{c'}* that is a collection of probabilities *p_{cc',n"}* = Σ_{*n*,*n'*|*n*+*n'*=}*_{n"}p*_{*c*,*n*} × *p_{c',n'}.*

Preferably, the processing phase further comprises a correcting step. This correcting step is configured to correct the computation result *R*(*̅p̅*̅) using at least one partition computation result *R*(*̅p̅*̅_{Λ}). According to an embodiment, the correcting step comprises computing the error-mitigated computation result.

According to an embodiment, the processing phase 130 comprises the following steps:
- Combining, by the classical information processing module 220, all the probability distributions *p̅_{c}* associated with the chosen partition Λ to construct a new *N*-photon probability distribution *̅p̅*̅_{Λ} that approximates at least partially a noise impacting *̅p̅*̅, comprising:
   o Computing the new probability distribution by convoluting the probability distributions associated with each cell in the chosen partition: *̅p̅*̅_{Λ} = *̅p̅*̅_{*c*1} * *̅p̅*̅_{*c*2} * ... * *p̅_{cₘ}*;
   o For example, convoluting two cell probability distributions *p̅_{c}* and *p̅_{c'}* to give a partial partition probability distribution *p̅_{cc'}* = *p̅_{c}* * *p̅_{c'}* that is a collection of probabilities *p_{cc',n"}* = Σ_{*n*,*n'*|*n*+*n'*=}*_{n"}p*_{*c*,*n*} × *p_{c',n'}*;
   o Computing, preferably by a weighted subtraction of at least one partition computation result *R*(*̅p̅*̅_{Λ}) from the computation result *R*(*̅p̅*̅), the error-mitigated computation result *R' = w*₀*R*(*̅p̅*̅) - Σ_{Λ} *w*_{Λ}*R*(*̅p̅*̅_{Λ}) where the correction weight *w*₀ and each partition correction weight *w*_{Λ} are predetermined real or complex values that form the error mitigation parameters. Optionally, this step can comprise computing the error-mitigated probability distribution *p̅'* by subtracting the reconstructed *N* -photon probability distribution *̅p̅*̅_{Λ} from the original *N* -photon distribution *̅p̅*̅ to get *p̅'* = *̅p̅*̅ - *w*_{Λ} *̅p̅*̅_{Λ} where the weight *w*_{Λ} is a real value that depends on the chosen partition Λ.

According to an embodiment, the application phase 140 is where the error mitigation result is used for various applications. During this application phase 140, the error-mitigated computation result R' is advantageously used 141 in place of the computation result *R*(*̅p̅*̅) as the output of at least one photonic quantum information processing procedure.

According to an embodiment, the application phase can comprise using the error-mitigated computation result R' for different kinds of applications like computing, simulation, communication, and sensing protocols that are designed to use perfectly indistinguishable photons to produce an unknown application result *R*ₐₚₚ.

According to an embodiment, a successful implementation of the present invention is thus one that produces a computation result *R*(*̅p̅*̅) close to *R*ₐₚₚ so that *D*(*R*(*̅p̅*̅), *R*ₐₚₚ) ≤ *ε*, where *D* is a function, such as a distance, that computes how close the two results are, *ε* is a predetermined maximum amount of error in the result that can be tolerated by the application, and *R*ₐₚₚ is the theoretical computation result of the application. Due to physical imperfections including partial distinguishability of photons, the computation result *R*(*̅p̅*̅) is not exactly equal to *R*ₐₚₚ and may even exceed the maximum error: *D*(*R*(*̅p̅*̅), *R*ₐₚₚ) > *ε*. Using the application phase, the present invention allows to obtain a better estimate of *R*ₐₚₚ and even bring the computation result to below the maximum tolerable error by using the mitigated computation result R' in place of the computation result. That is, by replacing *R*(*̅p̅*̅) with *R',* the present invention allows to reach *D(R', R*ₐₚₚ) ≤ *ε* and hence the error mitigation method enhances the application by providing a better estimate of the unknown application result.

Specific applications could produce a numerical simulation result, like the value of the ground-state energy of a molecule; a computational algorithm result, like a prime factor of a large integer; a message or secret key for communication, such as a string of classical bits; or the computation result could encode information about the environment, such as the index of refraction of a material that the photons passed through before detection.

For example, variational quantum algorithms can be used to estimate the ground-state energy of a molecule, say carbon monoxide (CO) which is known to be approximately *R*ₐₚₚ = -113.30 eV. For chemical simulations to be useful, they usually need to be within chemical accuracy, or where the difference *D*(*R*₁, *R*₂) = |*R*₁ - *R*₂| is no more than approximately *ε* = 0.04 eV. When using partially distinguishable photons, a variational quantum algorithm may produce a computation result that converges to a ground state energy of just *R*(*̅p̅*̅) = -112.25 eV, which is not within chemical accuracy to be used for a real-world application: *D*(*R*(*̅p̅*̅), *R*ₐₚₚ) = |*R*(*̅p̅*̅) - *R*ₐₚₚ| = 1.05 eV > *ε*. However, when using the error mitigation method, i.e. the present invention, the errors caused by the partially distinguishable photons are mitigated and the variational quantum algorithm can cause the error mitigated computation result to converge to *R'* = -113.28 eV, which is within chemical accuracy: *D*(*R', R*ₐₚₚ) = |*R'* - *R*ₐₚₚ| = 0.02 eV < *ε*. Of course, carbon monoxide is a molecule where the ground-state energy is well known. However, by calibrating the mitigation method using known results, the method can be applied to molecules where the ground-state energy is unknown, and we can be sure that the error mitigated computation result is more accurate than the unmitigated computation result.

As illustrated by figure 1, the method begins with photon production 110, followed by measuring 120 the output probability distribution and estimating the probability distributions of individual cells within chosen partitions. The processing phase 130 then combines these probability distributions to construct a new N-photon probability distribution that approximates the noise impacting the original distribution.

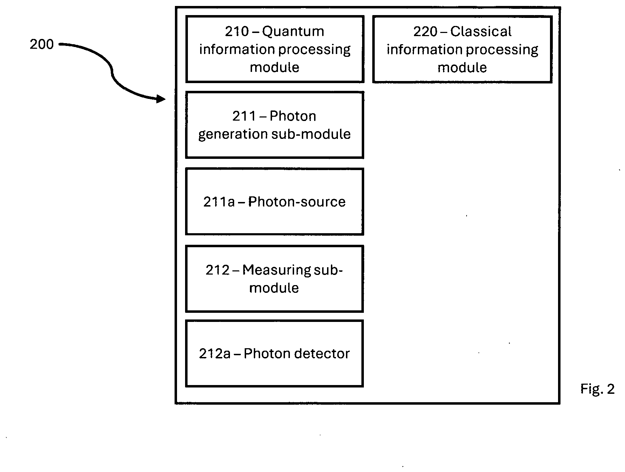

As illustrated by figure 2, the present invention relates to a computer-implemented system 200 for error mitigation in photonic quantum information processing, comprising:
- a quantum information processing module 210; and
- a classical information processing module 220.

According to an embodiment, the quantum information processing module 210 comprises:
o a photon generation sub-module 211;
o An output;
o A measuring sub-module 212.

According to an embodiment, the photon generation sub-module 211 comprises at least one photon-source 211a. Advantageously, said photon generation sub-module 211 is configured to generate partially distinguishable photons 10.

According to an embodiment, the output of the quantum information processing module 210 is configured to deliver partially distinguishable photons 10.

According to an embodiment, the measuring sub-module 212 comprises at least one photon detector 212a. Preferably, said measuring sub-module 212 is configured to measure the probability distribution *̅p̅*̅ produced by N partially distinguishable photons 10 at said output of said quantum information processing module 210. Advantageously, the photons 10 are measured within a predetermined time by the measuring sub-module 212.

Preferably, the measuring sub-module 212 is designed to continuously monitor and record the number of detected photons during the specified time frame. The detector 212 may comprise of a photodiode or other suitable photoelectric sensor capable of converting photon energy into electrical signals.

According to an embodiment, said quantum information processing module 210 is configured to:
- estimate probability distributions of *N* - *K* photons at its output;
- choose at least one partition Λ of the input photons containing at least one cell c;
- estimate the probability distribution *̅p̅*̅_{c} associated with at least one cell *c* by considering only the input photons in said cell c of the chosen partition Λ;

According to an embodiment, the classical information processing module 220 is configured to:
o combine all the cell probability distributions *p̅_{c}* associated with the chosen partition Λ to construct at least one partition computation result *R*(*̅p̅*̅_{Λ}) that approximates at least partially the noise impacting the computation result *R*(*̅p̅*̅);
o compute the partition computation result *R*(*̅p̅*̅_{Λ}) , for example by convoluting the probability distributions associated with each cell in the chosen partition: *̅p̅*̅_{Λ} = *̅p̅*̅_{*c*₁} * *̅p̅*̅_{*c*₂} * ... * *p̅_{cₘ}*;
o convolute two probability distributions *̅p̅*̅_{c} and *p̅_{c'}* to give a new probability distribution *̅p̅*̅_{*cc*'} = *p̅_{c}* * *p̅_{c'}* that is a collection of probabilities *p_{cc',n"}* = Σ_{*n*,*n*'|+*n'*=}*_{n"}p_{c,n}* × *p_{c',n'};*
o compute the error-mitigated probability distribution *p̅'* by subtracting the reconstructed N -photon probability distribution *̅p̅*̅_{Λ} from the original N - photon distribution *̅p̅*̅ to get *p̅'* = *̅p̅*̅ - *w*_{Λ} *̅p̅*̅_{Λ} where the weight *w*_{Λ} is a real value that depends on the chosen partition Λ.

According to an embodiment, the classical information processing module 220 is further configured to:
o label, preferably uniquely label, each partially distinguishable photon of the *N* partially distinguishable photons;
o choose at least one partition Λ of the input photons containing at least one cell *c*;
o estimate the probability distribution *p̅_{c}* associated with at least one cell *c* by considering only the input photons in said cell *c* of the chosen partition Λ.
∘ correct a computation result *R*(*̅p̅*̅) using at least one partition computation result *R*(*̅p̅*̅_{Λ}), by computing, by a weighted subtraction of at least one partition computation result *R*(*̅p̅*̅_{Λ}) from the computation result *R*(*̅p̅*̅), the error-mitigated computation result *R'* = *w*₀*R*(*̅p̅*̅) - Σ_{Λ} *w*_{Λ}*R*(*̅p̅*̅_{Λ}) where the correction weight *w*₀ and each partition correction weight *w*_{Λ} are predetermined real or complex values that form the error mitigation parameters.

According to an embodiment, to construct this partition computation result *R*(*̅p̅*̅_{Λ}), the classical information processing module 220 computes the convolution of the probability distributions associated with each cell in the chosen partition. The convolution of two probability distributions results in a new probability distribution that is a collection of probabilities and that is associated with this partition computation result *R*(*̅p̅*̅_{Λ}). The error-mitigated probability distribution can for example be then computed by subtracting the reconstructed N-photon probability distribution from the original N-photon distribution, where the weight is a real value that depends on the chosen partition. According to an embodiment, the error-mitigated computation result *R*' *= w*₀*R*(*̅p̅*̅) - Σ_{Λ} *w*_{Λ}*R*(*̅p̅*̅_{Λ}), where the correction weight *w*₀ and each partition correction weight *w*_{Λ} are predetermined real or complex values that form the error mitigation parameters, is computed by the weighted subtraction of at least one partition computation result *R*(*̅p̅*̅_{Λ}) from the computation result *R*(*̅p̅*̅).

According to an embodiment, the classical information processing module 220 can comprise a computer and/or an analogue circuitry, like a correlator or a time tagger, for example.

According to an embodiment, the classical information processing module 220 can be comprised by a classical computer to simulate results and/or can comprise a classical circuitry used by the quantum processing unit 210 to analyses the detectors 212a outputs.

According to an embodiment, the method further comprises a step of repeating said measuring phase with a partition computation result *R*(*̅p̅*̅_{Λ}) where R is replaced by the error mitigated computation result R' and where the probability distribution *p̅'*_{c} associated with said cell c is computed using said quantum information processing module 210 or said classical information processing module 220.

According to an embodiment, the system 200 may further include a classical computer configured to control one or several of the modules of the present invention. The classical computer can comprise the classical information processing module 220 to perform simulations of the theoretical distribution, learn the set of parameters for error mitigation, and perform the error mitigation on the output by controlling the photon shutters 250 and post-processing using the learned parameters.

Preferably, the system 200 can be extended to mitigate multi-photon errors even without losses by using more accurate corrections at the cost of measuring more partitions and learning more parameters. Bounds on parameters for large-sized experiments where outcomes are unknown can be estimated from learning on smaller-sized experiments where outcomes are known. The method can also be combined with a loss-mitigation method (Photon Recycling) to simultaneously mitigate losses. It can be extended to mitigate boson sampling by using rejection sampling or by measuring marginals.

Advantageously, the input states of light other than single-photon states can be used, so long as they are diagonal in the partition basis. Any input can be forced to be diagonal in partition basis by averaging over all permutations of photons.

It is interesting to note that the use of error mitigation techniques does not exclude the possibility of incorporating additional error correction codes or error detection schemes in the overall system design. These techniques can be employed at various stages of the measurement process, from initial state preparation to final data processing, to further enhance the accuracy and robustness of the measurements.

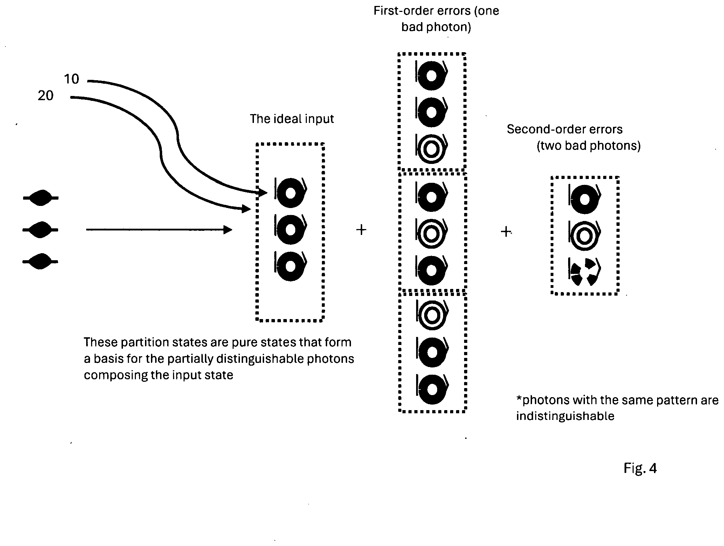

According to an embodiment, and as illustrated by figure 4, the partition framework is based on a unique grouping of all photon labels where each partition 20 is composed of groups of photons 10, called cells. Under realistic assumptions, indistinguishable photons, also called imperfect photons or partially distinguishable photons, can be decomposed into a weighted mixture of partitions. Specifically, the imperfect input state, also called partially distinguishable input state, can be expressed as a convex combination of pure partition states, which form a basis for or closely approximate the mixed input state.

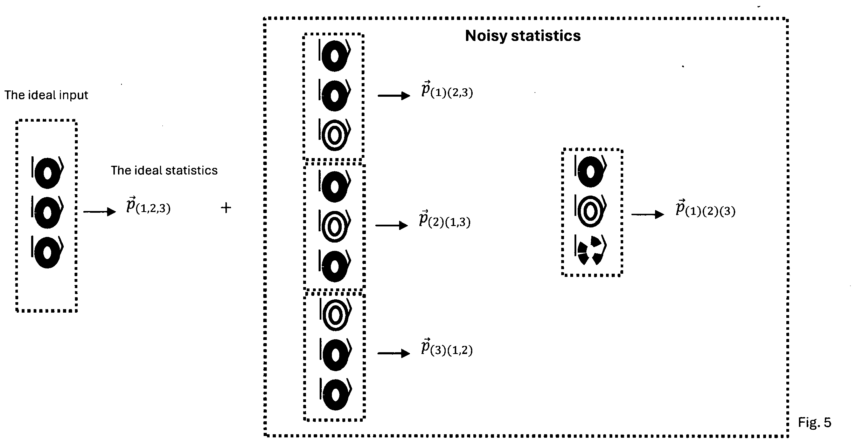

According to an embodiment, and as illustrated by figure 5, the partition framework predicts that the probability distribution *̅p̅*̅ produced by *N* partially distinguishable photons (10) can be decomposed into a weighted mixture of partition probability distributions. Said mixture can be divided into an ideal part, containing the ideal probability distribution, and a noisy part, which contains the partition probability distribution associated with errors in the computation.

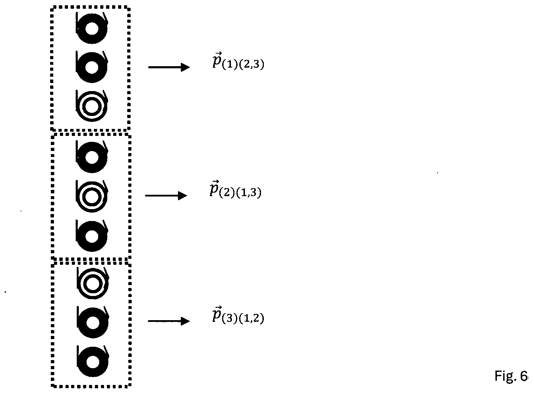

According to an embodiment, and as illustrated by figure 6, these probability distributions can be used to approximate the relevant parts of the noise that impacts the original N-photon distribution, allowing to later construct an approximating distribution that can be subtracted from the original to obtain the error-mitigated distribution.

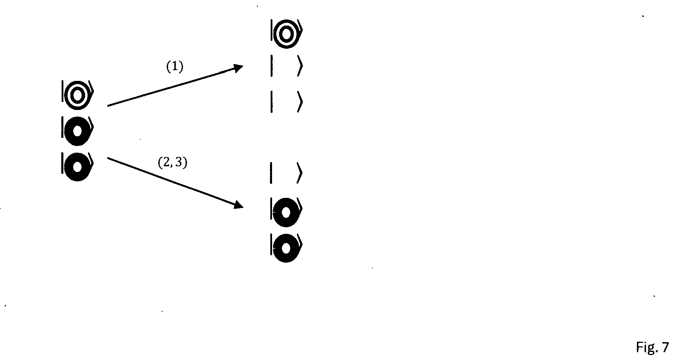

According to an embodiment, and as illustrated by figure 7 and described hereabove, each partition state is composed of groups of photons, denoted as cells. To separate each partition state into fully indistinguishable input states of fewer photons, the estimating step involves separating a predetermined group of photons from the input and estimating the probability distribution associated with each cell in the chosen partition by considering only the input photons within that cell. The present invention effectively breaks down the larger partition state into smaller, fully indistinguishable input states containing fewer photons.

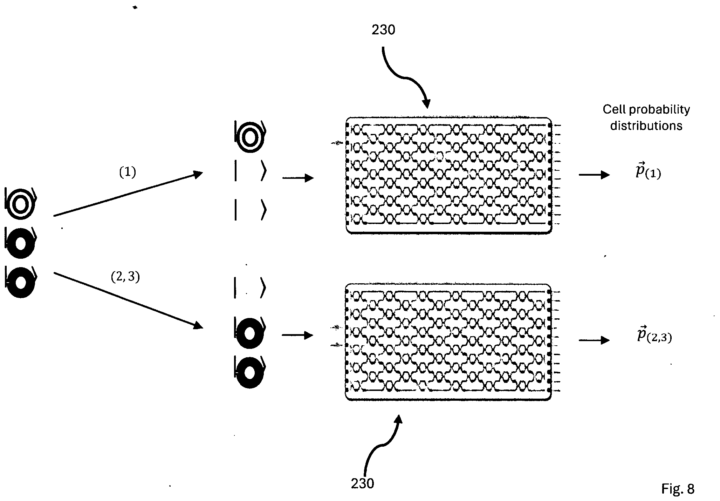

According to an embodiment, and as illustrated by figure 8, to approximate the output distribution from noisy scenarios, the present invention is configured to measure the cell probability distribution relative to each cell of a chosen partition. By separating the paths of photons at specific inputs, the classical information processing module can control the number of photons entering the linear-optical interferometer and thereby measure the cell probability distribution relative to a subset of the input photons.

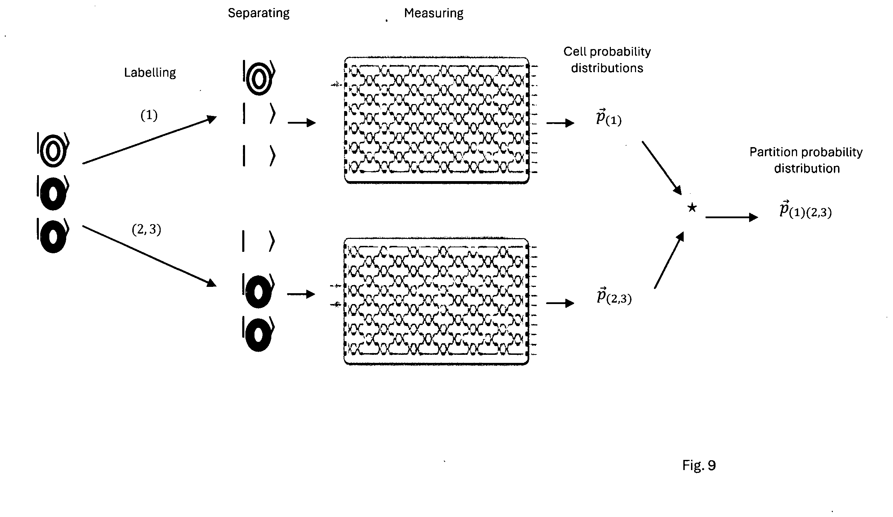

According to an embodiment, and as illustrated by figure 9, the present invention is configured to recover a partial approximation of the actual noise by recombining the cell probability distributions into an N-photon partition probability distribution. Said N-photon distribution is obtained through the convolution operation being mathematically represented by the symbol "*"..

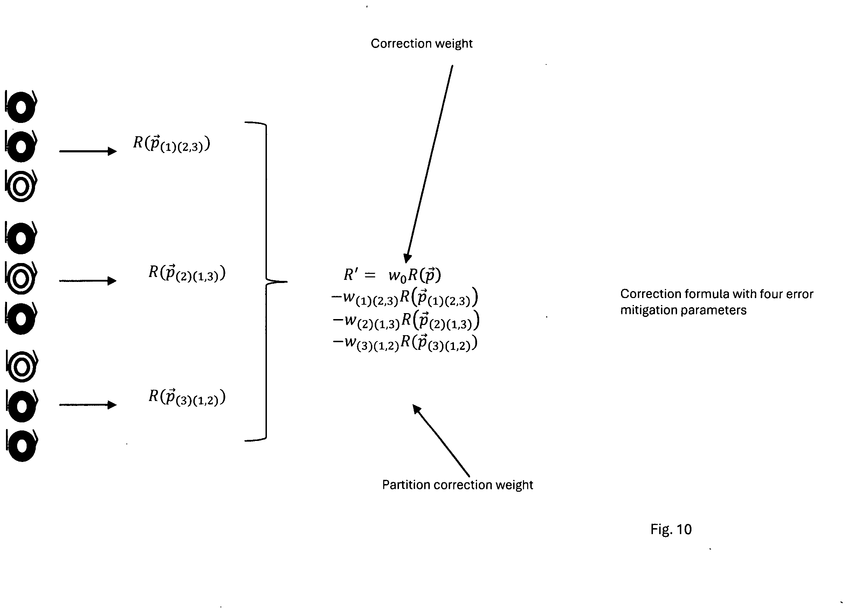

According to an embodiment, and as illustrated by figure 10, the weighted subtraction of the partition computation results is used to recover an error mitigated computation result. This is achieved by combining each individual partition computation result with its corresponding partition correction weight. Said weights represent the set of error mitigation parameters relevant to the procedure.

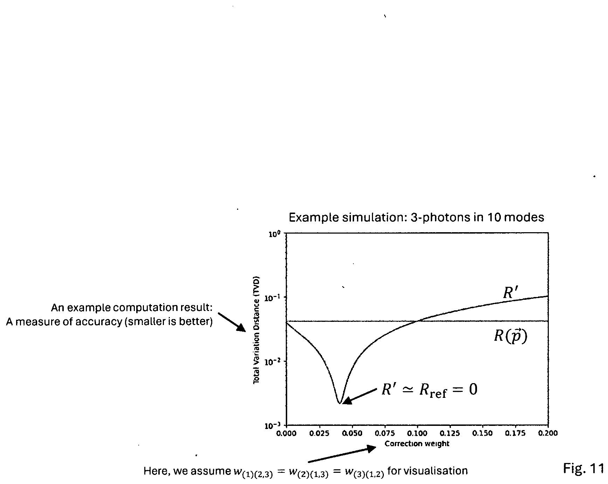

According to an embodiment, and as illustrated by figure 11, the classical information processing module utilizes statistical analysis techniques to compare the measured data with the theoretical distribution. This comparison enables the identification of discrepancies between the ideal and actual system behavior, which can then be addressed through parameter adjustments. For an appropriate set of parameters *̅w̅*̅ = (w₁, w₂, w₃), the determined values are used to correct the system's noise in real-time to minimize errors and improve overall performance. Advantageously, the corrected distribution is much closer to the ideal distribution after renormalization.

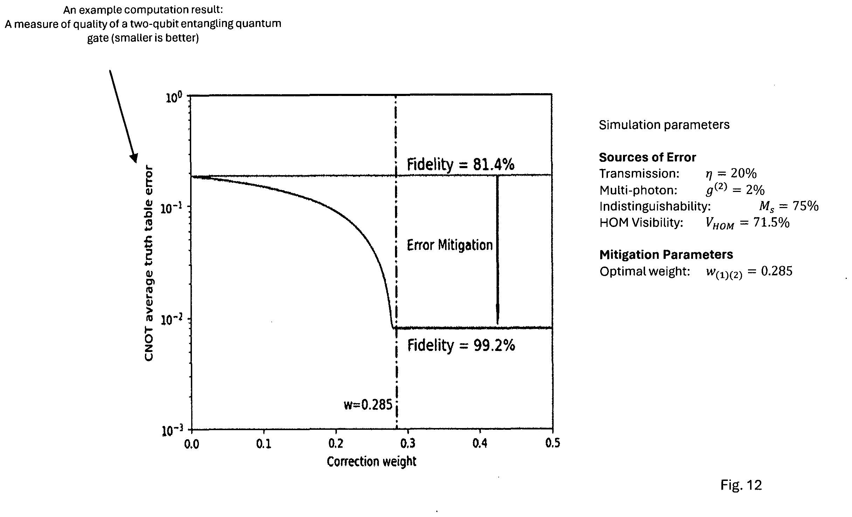

According to an embodiment, and as illustrated by figure 12, the present invention involves the repetition of measurements and application of statistical methods to identify and mitigate errors. By implementing this technique, the error mitigation method can be computationally efficient, allowing for large-scale implementation in quantum computing systems. As a result, the present invention leads, for example, to orders of magnitude reduction in gate errors.

According to an embodiment, and as illustrated by figure 250, the system 200 comprises at least one shutter module 250. The shutter module 250 preferably comprises at least one shutter, also called a photon shutter, configured to remove at least one photon from at least one path. Advantageously, the deterministic removal of photons can be implemented using said shutter module 250. The use of a shutter module 250 enables precise control over the removal of photons from the system.

Furthermore, the shutter or shutters of the shutter module 250 can be designed to open and close rapidly, allowing for real-time or near real-time control over the removal of photons.

Moreover, multiple shutter modules 250 can be employed in parallel or in series to remove photons from different parts of the system simultaneously or sequentially.

Additionally, the shutter module 250 can be integrated with other components of the system, such as filters or modulators, to selectively remove specific types or wavelengths of photons.

Preferably, the system 200 comprises at least one photon-source 211a that emits photons and at least one detector 212a that receives the photons 10. The shutter module 250 is positioned between the photon-source 211a, also called the light source, and the detector 212a. Advantageously, the shutter module 250 comprises a material with specific optical properties that allows for selective absorption or reflection of photons based on their wavelength or polarization. This enables deterministic removal of certain photons while allowing others to pass through, for example. Furthermore, the shutter module 250 may be actuated by an external control signal, such as an electrical or optical signal, to open and close a mechanical aperture as desired. This allows for precise control over which photons are allowed to reach the detector. Moreover, the system may include feedback mechanisms that enable real-time adjustment of the shutter module's properties or position based on the detected photon flux or other relevant parameters.

Moreover, the shutter may be configured to have different shapes and sizes depending on the specific application needs. For instance, it could be a flat panel shutter, a slatted shutter, or a circular shutter, among others.

Additionally, the system 200 can include multiple shutter modules 250, each controlling separate openings within the system 200. This feature allows for independent control of different areas and enhances the overall functionality of the system.

According to an embodiment, the predetermined order of removal of the K photons 10 can be dynamically determined, for example, according to certain conditions or instructions or measurements.

Moreover, the dynamic determination of the order can be achieved through various techniques, such as machine learning algorithms or rule-based systems. These methods can learn from historical data or user feedback to optimize the order for future applications, for example.

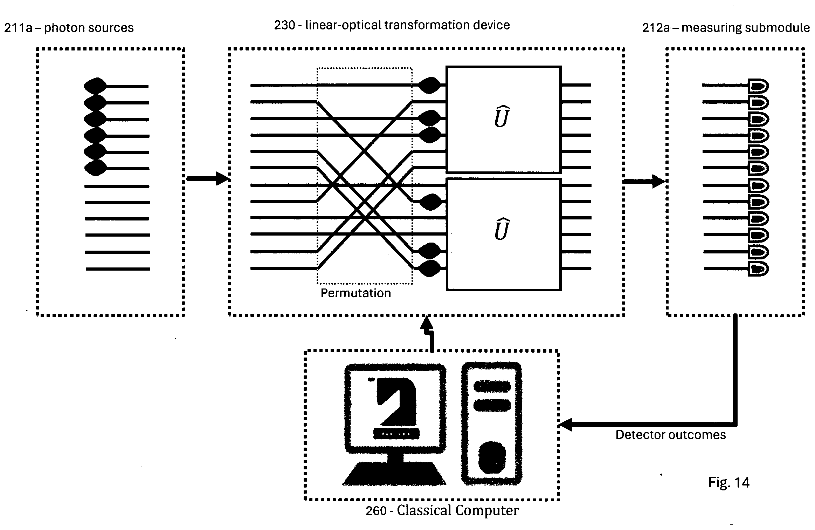

According to an embodiment, and as illustrated by figure 14, the linear-optical transformation device 230 can be configured to generate permutations between a plurality of photons, and advantageously to separate some photons.

According to an embodiment, the system 200 comprises at least one permutation device. The permutation device, also called a photon separator, is configured to separate at least one photon from other photons along its path. This enables precise control over which photons reach specific destinations within the system 200.

The photon separator can be configured to operate rapidly, allowing for real-time or near real-time separation of photons. Multiple photon separator can be employed in parallel or in series to separate photons from different parts of the system 200 simultaneously or sequentially, enhancing overall functionality and flexibility.

The photon separator can be integrated with other components such as filters or modulators to selectively separate specific types or wavelengths of photons based on their properties.

The photon separator can be positioned between the photon-source 211a and the detector 212a, allowing for precise control over which photons reach the detector.

The photon separator may be actuated by an external control signal, such as an electrical or optical signal, to separate or not a specific photon.

The system 200 may include feedback mechanisms that enable real-time adjustment of the photon separator's properties or actions based on detected photon flux or other relevant parameters.

According to an embodiment, the predetermined order in which K photons 10 are separated can be dynamically determined based on certain conditions, instructions, or measurements. This dynamic determination can be achieved using various techniques such as machine learning algorithms or rule-based systems that learn from historical data or user feedback to optimize the separation order for future applications.

According to an embodiment, the generating step 111 comprises generating at least one excitation pulse to excite the photon generation sub-module 211. Preferably, this excitation pulse triggers or attempts to trigger the emission of photons from the photon generation sub-module 211. Indeed, preferably, this photon generation sub-module 211 is configured to generate at least one excitation pulse for exciting the photon-source 211a. Furthermore, the photon generation sub-module 211 is capable of producing a string of photons by controlling the sequence of excitation pulses. Advantageously, this control allows for the periodic production of photons or the absence thereof.

According to an embodiment, the method 100 comprises producing a string of photons by controlling the sequence of excitation pulses.

The present system 200 enables precise control over the generation and sequencing of photons. By generating excitation pulses to excite the photon-source 211a and controlling their sequence, the system 200 can produce a string of photons on demand or suppress their production altogether. This level of control can lead to improved system performance and increased flexibility in application design.

Moreover, according to an embodiment, the method 100 may involve using multiple photon generation sub-modules 211, each responsive to distinct excitation pulses. In this configuration, the sequence control allows for independent modulation of the photon emissions from different sub-modules.

According to an embodiment, the method 100 comprises generating an excitation pulse using a laser and/or an electrical excitation component.

Preferably, the laser is a pulsed laser capable of producing high-intensity, short-duration pulses. The electrical excitation component may be in the form of an electric field or an electrical discharge.

Advantageously, using a laser and/or electrical excitation component allows for precise control over the timing, duration, and intensity of the excitation pulse. This feature is particularly useful for accurate and repeatable results.

The use of a laser and/or electrical excitation component in generating the excitation pulse does not limit the scope of the present invention. Other methods for generating an excitation pulse, such as using magnetic fields or ultrasound, may also fall within the scope of the present invention, for example.

According to an embodiment, the system 200 comprises a laser configured to generate an excitation pulse. Preferably, the laser is optically pumped and emits coherent radiation at a specific wavelength. The laser pulse duration and energy can be controlled to achieve precise excitation of target material.

According to an embodiment, the system 200 comprises an electrical excitation component. This component is configured to generate an excitation pulse. Preferably, the electrical excitation component comprises an electronic circuit. This component is powered preferably by a power source. The power source supplies electrical energy to the electronic circuit, which in turn generates the excitation pulse. Advantageously, the electrical excitation component can be adjustable, allowing for the excitation pulse parameters to be fine-tuned as needed.

Furthermore, the system 200 may include a control unit that sends a signal to the laser and/or to the electrical excitation component to initiate the generation of the excitation pulse. The control unit may also receive feedback from sensors and adjust the excitation pulse parameters accordingly. The control unit is preferably integrated into the classical information processing module 220.

According to an embodiment, the method 100 comprises a step of producing a string of n photons through generating at least one string of pulses. The configuration of the photon generation sub-module 211 to produce a string of pulses enables efficient and controlled generation of photons. The use of strings of pulses allows for the generation of multiple photons in quick succession. In the context of quantum computing, the generation of strings of photons can be useful for implementing quantum algorithms based on linear optics or photonic qubits.

Moreover, the system 200 may comprise a feedback loop that monitors the output of the photon generation sub-module 211 and provides real-time adjustments to the control signals generated by control unit. This feature enables the system 200 to adapt to changing conditions and maintain optimal performance.

According to an embodiment, the method 100 can further comprise an additional feature for controlling the sequence of generated photons. This enhanced control can be achieved through a demultiplexing step.

According to an embodiment, the system 200 comprises a demultiplexing device. Advantageously, the demultiplexing device is configured to demultiplex the string of photons into multiple streams, each containing one or several single photons. Furthermore, the demultiplexing device may employ techniques such as wavelength division multiplexing (WDM) and/or time-division multiplexing (TDM) to separate the photons based on their wavelengths or arrival times, respectively. This allows for parallel processing of multiple photon streams within the system 200 as well as the creation of stream of photons.

Preferably, controlling the sequence of excitation pulses using said photon generation sub-module 211 further comprises the demultiplexing step of said string of photons into n streams of one single photon using said demultiplexing device.

Preferably, the demultiplexing device is configured to receive a multiplexed signal, or more precisely a string of a plurality of photons, and separate it/them into multiple distinct signals or n streams based on a predetermined criterion. Furthermore, the system 200 may comprise a controller that manages the operation of the demultiplexing device and communicates with other components of the system 200. This controller is preferably integrated into the classical information processing module 220.

According to an embodiment, the method 100 comprises a generating step of at least one cell comprising at least one photon from said n streams of one single photon using a plurality of shutters and/or the demultiplexing device. Advantageously, at least one cell in this generating step contains at least one photon produced from the streams of single photons. The plurality of shutters is utilized to control the generation of these photons.

In more detail, according to an embodiment, the method 100 further comprises the following steps:
- Controlling the sequence of excitation pulses using the photon generation sub-module 211.
- Generating at least one cell within this sub-module 211.
- Producing at least one photon from the streams of single photons in this generating step.
- Utilizing a plurality of shutters to generate these photons.

According to an embodiment, the system 200 comprises at least one single-photon source 211a. Said single-photon source 211a comprises preferably at least one electrical and/or optical excitation component, such as a quantum dot, for example.

According to an embodiment, the system 200 comprises at least one linear optical transformation device 230. This device is configured to apply a linear optical transformation on at least one partially distinguishable photon. Indeed, according to an embodiment, the method 100 comprises a step of applying a linear optical transformation on at least one partially distinguishable photon using said linear optical transformation device 230.

Preferably, the linear optical transformation device 230 comprises a series of optical elements. These optical elements are designed to act linearly on the quantum states of the input photons.

Advantageously, the use of linear optical transformations enables the system 200 to perform complex computational tasks on partially distinguishable photons. This is particularly useful in the field of quantum information processing and quantum computing.

Preferably, the partially distinguishable photons are generated as previously described. These photons may carry information in their quantum states, which can be manipulated using the linear optical transformations to perform computational tasks.

Advantageously, the system 200 can be implemented using off-the-shelf components and standard optical techniques, making it a cost-effective solution for performing linear optical transformations on partially distinguishable photons.

Preferably, this linear optical transformation device 230 is designed to manipulate the quantum states of the input photons through interference patterns produced by at least one interferometer 240.

Indeed, according to an embodiment, the linear optical transformation device 230 comprises at least one interferometer 240. The linear optical transformation device 230 is configured to transform an input signal into an output signal using optical means. Preferably, the interferometer 240 is implemented as a Mach-Zehnder interferometer, which can comprise a beam splitter, two mirrors, and two input ports for the light beams. The light beams enter one of the input ports and are split by the beam splitter into two paths. Each path undergoes a phase shift before being recombined at the output port. The resulting interference pattern depends on the relative phase difference between the two paths, which can be controlled by adjusting the length or the refractive index of one of the paths. Moreover, the interferometer 240 can be integrated with other optical components in the system to perform various functions. For instance, it can be used as a filter to selectively transmit or reflect specific wavelengths of light, or as a modulator to change the phase or polarization of the input signal.

According to an embodiment, the linear optical transformation device 230 can be implemented as a photonic integrated chip. Preferably, the photonic integrated chip can comprise waveguides, modulators, and even detectors arranged in a planar structure. The waveguides are used to guide light signals through the chip, while the modulators provide controllable phase shifts or amplitude modifications to the light signals. The detectors measure the output of the linear optical transformation. The photonic integrated chip may be fabricated using various technologies such as silicon-on-insulator (SOI), silicon nitride on silicon (SiNx), or indium phosphide (InP). The specific choice of technology depends on the desired application and performance requirements. It is noted that the use of a photonic integrated chip as the linear optical transformation device 230 is not limiting, and other types of devices may be employed instead if desired.

Furthermore, according to an embodiment, measuring the presence of photons at the output of the linear optical transformation device 230 is carried out using the detector module 212. Advantageously, this measurement phase allows for the detection and recording of the outcome of the linear optical transformation applied to the photon. Additionally, according to an embodiment, the output from the detector module 212 is received by the classical information processing module 220. Preferably, the classical information processing module 220 is responsible for further processing and analyzing the measurement results obtained from the detector module 212, as previously described.

Advantageously, the system allows for real-time detection and analysis of optical signals undergoing linear transformations within the system, as described hereafter. Moreover, the detector module 212 may be connected to a signal processing unit that analyzes the detected photon signals and generates output data. This signal processing unit is preferably comprised by the classical information processing module 220. In some embodiments, the system 200 may incorporate feedback mechanisms that utilize the detected photon signals to optimize or control the performance of a linear optical transformation device 230, as described hereafter.

According to an embodiment, the detector module 212 is configured to detect a specific condition or event. The classical information processing module 220 is preferably connected to receive the output from the detector module 212. Advantageously, the classical information processing module 220 processes the received output using established algorithms and techniques to extract meaningful information. This processed information can then be utilized for various applications such as control, monitoring, and/or analysis.

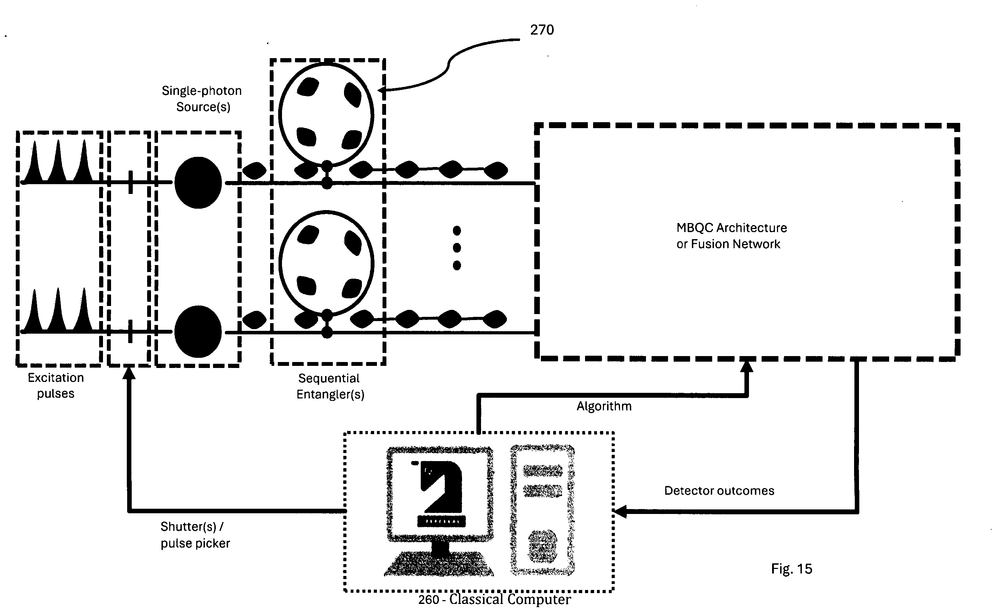

According to an embodiment, the method involves generating interaction between photons. Each photon may originate from different strings or the same string. Preferably, interaction between photons from the same string can be achieved by employing a time-delayed loop device 270, such as a time-delayed optical fiber or on-chip waveguides, as illustrated in figure 15. Alternatively, interaction may be generated between photons originating from the same string using at least one quantum memory, such as atomic vapor, cold atoms, or doped materials, for example.

According to an embodiment, the linear optical transformation device 230 is configured to generate interaction between photons. This interaction can occur between photons derived from different strings or the same string. In some embodiments, preferably, the linear optical transformation device 230 generates interaction between photons sourced from both the same and different strings.

According to an embodiment, the system 200 comprises a time-delayed loop device 270. Preferably, said time-delayed loop device 270 can be integrated into the linear optical transformation device 230. The time-delayed loop device 270 is designed to introduce a controlled delay in the propagation of photons within the system 200. Advantageously, the time-delayed loop device 270 is configured to generate interaction between photons. More specifically, each photon comes from the same input string and experiences a controlled phase difference upon traversing the time-delayed loop device 270, for example multiple times.

According to an embodiment, the time-delayed loop device 270 comprises at least one time-delayed optical fiber. Advantageously, the optical fiber is made of a low-loss material and has a length that introduces a desired time delay in the signal transmitted through it.

Alternatively, or in addition to the optical fiber, the time-delayed loop device 270 may comprise at least one waveguide embedded on at least one chip. The waveguide is advantageously made of a semiconductor material and has a length that introduces a desired time delay in the signal propagated through it.

According to an embodiment, the system 200 comprises a quantum memory. Preferably, said quantum memory is integrated with the linear optical transformation device 230. Advantageously, each quantum memory in the system 200 can generate interaction between photons. This interaction may occur between photons that originate from the same string or different strings.

According to an embodiment, the quantum memory comprises at least one among: an atomic vapor device, a cold atoms device, or a doped material device.

The atomic vapor device is a type of quantum memory that utilizes an ensemble of atoms in a vapor state. This device can be implemented using alkali metal atoms such as rubidium or cesium, which are optically pumped and manipulated using laser fields. The coherence time of the atomic vapor device is advantageously long due to its large number of interacting atoms.

The cold atoms device is another type of quantum memory that employs a Bose-Einstein condensate or a Fermi degenerate gas of atoms cooled to extremely low temperatures. This device can be realized using various atomic species, such as rubidium, sodium, or potassium, confined in an optical dipole trap. The cold atoms device offers the advantage of long coherence times and high quantum memory capacity due to its large number of interacting atoms.

The doped material device is a type of quantum memory based on solid-state materials with impurities or defects that can be manipulated to store qubits. This device can be implemented using various materials, such as silicon carbide, gallium nitride, or diamond, doped with specific impurities like boron or phosphorus. The doped material device advantageously offers the benefits of scalability and compatibility with existing semiconductor technology.

In summary, according to this embodiment, the quantum memory component of the system 200 can be implemented using any kind of quantum memory technology. Each type offers unique advantages in terms of coherence time, capacity, and compatibility with existing technology.

According to an embodiment, the classical information processing module 220 is configured to perform simulation for calculating theoretical distributions. This module 220 takes input data and uses mathematical models or algorithms to generate expected outcomes under ideal conditions. Advantageously, this module 220 is further configured to determine values for each parameter of at least one set of parameters for error mitigation based on the measured data and the calculated theoretical distribution. The determined values are used to adjust the system's behavior in real-time to minimize errors and improve overall performance. Preferably, the classical information processing module 220 utilizes statistical analysis techniques to compare the measured data with the theoretical distribution. This comparison enables the identification of discrepancies between the ideal and actual system's behavior, which can then be addressed through parameter adjustments.

According to an embodiment, during the processing phase 130, the following steps are performed:
- Simulation: Advantageously, this step involves using the classical information processing module 220 for calculating the theoretical distribution.
- Determination: Preferably, a value for each parameter of at least one set of parameters is determined based on the measured data and the calculated theoretical distribution. This determination is also carried out using the classical information processing module 220.

According to an embodiment, the method 100 can be configured to utilize machine learning techniques for determining the set of parameters. According to this embodiment, in the determining step, the theoretical distribution and the mitigated distribution parametrized by the set of parameters are both taken into consideration. The mitigated distribution may be unfixed at this stage. Advantageously, a cost function is defined between these two distributions. This cost function serves as a measure of the difference between the theoretical and mitigated distributions. Preferably, the cost function is minimized to ascertain the optimal value for each parameter within the set of parameters. By minimizing the cost function, the algorithm seeks to minimize the discrepancy between the theoretical and mitigated distributions, thereby improving the accuracy and effectiveness of the method.

According to an embodiment, the system 220 comprises at least one machine learning module. This module is configured to determine the set of parameters.

According to an embodiment, this determined set of parameters is used for at least one error-mitigated computation. Preferably, the determination of the set of parameters is based on real-time data analysis or historical performance data. This ensures that the parameters are optimally suited for the specific computing task at hand. Additionally, the classical information processing module 220 may employ various error correction techniques to further enhance the robustness of the computations. Moreover, the system 200 may incorporate a feedback mechanism that continuously monitors at least one output of the classical information processing module 220 and adjusts some parameters within the system accordingly.

According to an embodiment, the system 200 comprises a classical computer 260. This classical computer 260 is configured to play the role of the classical information processing module 220 or to comprises the classical information processing module 220. This classical computer 260 can be configured to perform error mitigation based on the predetermined set of parameters. Preferably, these parameters are determined using both theoretical distributions and measured N-photon distributions. The classical computer 260 is preferably programmed to learn from the theoretical distribution, which represents an ideal or expected probability distribution. Additionally, it utilizes measured N-photon distributions, obtained through experiments, to refine the learning process. The system 200 advantageously employs both sources of information to improve error mitigation performance. Preferably, the classical computer 260 processes and analyzes the data from the measurements to determine the N-photon distributions. It then adjusts advantageously the predetermined parameters based on this analysis to optimize error mitigation. This process continues iteratively, allowing the system 200 to adapt and refine its error mitigation strategy over time.

According to an embodiment, the method 100 comprises the following features:
- The use of a classical computer 260: Preferably, this classical computer 260 is programmed with algorithms for error mitigation and machine learning.
- Learning a predetermined set of parameters: Advantageously, these parameters are based on theoretical distributions.
- Error mitigation: This refers to the process of correcting errors in data or calculations.
- Based on theoretical distribution: The method 100 utilizes mathematical models or theories to determine optimal parameter values for error correction.
- And the measured N-photon distributions: These are experimental data sets obtained from photon detection events, which are used to train and validate the error mitigation algorithm.

According to an embodiment, the present invention relates to a method for improving the quality of boson sampling distributions using error mitigation techniques.

Preferably, the method comprises the application of error mitigation techniques to boson sampling experiments. Boson sampling is a quantum computing task that involves generating and measuring the statistical distribution of bosons, such as photons, for example, in at least one multimode interferometer. The error mitigation technique is employed to reduce errors introduced during the measurement process.

Furthermore, the method may involve the use of classical post-processing algorithms to analyze the measurement data and apply the error mitigation technique.

In some embodiments, the method may be applied to various types of bosons sampling experiments, including those involving continuous variables or discrete variables. Additionally, the method may be used in combination with other quantum error correction techniques to further enhance the accuracy and reliability of the results.

According to an embodiment, the system is configured to mitigate errors in boson sampling distributions. Preferably, the error mitigation technique is applied by the present invention as previously described. Advantageously, the present invention can be configured for mitigating errors in boson sampling distributions. Preferably, the system is configured to perform error estimation and correction on individual boson sampling measurements.

Additionally, the classical information processing module 220 is configured to manage the overall operation of the system.

According to an embodiment, the system is capable of applying error mitigation techniques to quantities derived from boson-sampling-like distributions. Preferably, the system is configurable to work with linear-optical gates used in gate-based quantum computing. Advantageously, it can also be employed with variational quantum algorithms and quantum machine learning algorithms.

Preferably, the classical information processing module 220 is configured to input data in the form of boson-sampling-like distributions and apply the error mitigation technique to derive accurate quantities from the data. Advantageously, the system may employ machine learning algorithms or other advanced techniques to optimize the error mitigation process and enhance the overall performance of the system.

Preferably, the system 200 is designed to be compatible with existing quantum computing platforms and can be easily integrated into existing workflows. This makes it a valuable tool for researchers and developers working in the field of quantum computing.

In another embodiment, the system 200 may include a user interface that allows users to interact with the system 200, preferably directly with the classical information processing module 220 and advantageously indirectly with the quantum information processing module 210.

Overall, the present invention provides a powerful tool for improving the accuracy and reliability of quantum computing systems by applying advanced error mitigation techniques, preferably tailored for boson-sampling-like distributions. This can lead to significant advancements in various applications of quantum computing, including optimization, simulation, and machine learning.

Furthermore, according to an embodiment, the error mitigation technique used may involve the repetition of measurements and the application of statistical methods to identify and mitigate errors. In addition, according to an embodiment, the error mitigation technique may be implemented in a way that is computationally efficient, allowing for large-scale implementation in quantum computing systems.

According to an embodiment, the present invention can be applied to error mitigation techniques to multi-qubit quantum gates and circuits. Preferably, the error mitigation technique is employed to enhance the reliability and accuracy of quantum computations involving multiple qubits. Advantageously, implementing error mitigation techniques in multi-qubit gates and circuits can lead to improved performance and robustness in quantum computing systems.

In the context of quantum gates, error mitigation techniques may involve the use of redundant qubits or error-correcting codes to detect and correct errors during gate operations. For circuits, these techniques could include error estimation and correction methods that are specifically designed for quantum computing architectures.

The application of error mitigation techniques in multi-qubit gates and circuits is particularly important due to the increasing complexity and size of quantum systems. As the number of qubits grows, the likelihood and severity of errors increase as well. By addressing these errors through error mitigation techniques, the present invention can ensure that larger and more sophisticated quantum computations remain feasible and reliable.

According to an embodiment, the system is configured to implement error mitigation techniques for multi-qubit quantum gates and circuits.

In summary, the approach taken, according to the present invention, is to approximate the noise and then subtract it from the noisy distribution to obtain a distribution closer to the ideal distribution. The noise is approximated by measuring many different partitions of the imperfect input state for a fixed computation, which is accomplished by blocking some photons. The partition distributions obtained in this way can be recombined to get a total approximation of the noise.

To mitigate for partial distinguishability, the system also exploits information contained in discrete distributions where only N-K photons are detected. However, unlike Photon Recycling, these N-K distributions are explicitly measured by reducing the number of photons at the input rather than looking at outcomes for N input photons but where k photons were lost. Separating and/or removing photons is much smarter than varying the photon distinguishability, and hence it is much more practical than ZNE.

There are N such N-1 photon distributions where one photon is separated and/or removed at the input of the device. By combining these N-1 photon distributions, it is possible to construct a new N-photon distribution that approximates the noise impacting the measured N-photon distribution. Importantly, the parameters needed to perform this construction are The classical computer controls the shutter to separate and/or remove individual photons from the input state, measures the corresponding output distribution and uses post-processing to mitigate partial distinguishability errors. Light-based quantum computing relies on understanding the evolution of non-classical states through linear optics. More specifically, in the context of Boson Sampling, modelling how partially distinguishable single photons interfere is essential to probe the advantage provided by these non-standard computing devices.

The concept of distinguishability naturally arises when observing Hong-Ou-Mandel (HOM) interference between two general single photon states as a way to condense the complex interference phenomena in a single figure of merit. The interpretation is that overall the HOM experiment can be interpreted as a mixture of two scenarios where either two completely indistinguishable or perfectly distinguishable photons interfere, weighted by the distinguishability parameter.

Accurately accounting for the behavior of general single-photon states requires a description in the second quantization scenario, where light states must be described as living in a possibly continuous basis of orthogonal spatial/temporal bosonic modes. On the other hand, in a photocounting experiment involving two such states, one collective parameter, namely "distinguishability", is enough to explain the observed statistics.

Distinguishability and certification: As introduced earlier, assessing the effect of distinguishability is essential to certify the quality of a boson sampling experiment from a physical perspective. The various distinguishability description does not interface easily in this regard and some reference points are required. The considerations presented in this embodiment will come from the point of view given by two natural and closely related questions:
The first one is the characterization of "genuine n-photon indistinguishability" (GI), that is identifying the maximal share of the states which can be traced back to the n perfectly indistinguishable photons of the ideal statement of Boson Sampling. Related to that we find the accurate description of the "distinguishability transition" and how it affects the complexity of the sampling task from the regime of n indistinguishable photons to the completely distinguishable one.

Although it finds a natural definition for incoherently distinguishable states, quantifying GI is an only apparently trivial operation as will be clarified later. The context for the second question mainly comes from the considerations found in: while the two extrema of the distinguishability spectrum are well understood, it is shown there that representing partial distinguishability as a linear interpolation between the two is an extremely lacking tool. Inquiring how this transition is depicted in the two general distinguishability frameworks will highlight some issues that are solved in the incoherent description presented in this embodiment.

While able to exactly point at the measurable quantities that degrades path interference towards the classical regime, the downside of Shchesnovich's tomography-oriented approach is that it has no direct way of expressing the transition in sampling complexity (although some notable, noise-model-specific attempts were made). The expression one obtains for the outcome statistics seems to show that every intermediate distinguishability regime is equally much more difficult than ideal simulation, requiring the evaluation of n! distinct n times n permanents.

On the other hand, while abstracting a bit from the physical process of interference, the representation theory approach is able to create a useful link between the photocounting statistics of each orthogonal subspace and the immanants a family of matrix function which form a hierarchy in terms of intractability. The two notable member of this family are its supremum, the exponentially scaling permanent, and its infimum, the polynomially computable determinant. While in this framework one can qualitatively see how, when sampling from the output statistics, distinguishability biases the average case immanant towards the easy part of the spectrum, quantitative statements are harder since to date one does not have knowledge on how to best evaluate every immanant. By analyzing the photocounting statistics produced by this set of configurations, which is labelled partition states, and relying on an essential equivalence relation for photocounting experiments, the present invention addresses the conditions under which a suitable mixture of such states would be able to reproduce the behavior of an arbitrary partially distinguishable one.

To conclude, the present invention readily responds to the need of a complexity-oriented description of distinguishability, which encompasses the practically relevant scenario of interfering n identical copies of an arbitrarily complex single-photon state. Noise tailoring has been proven a successful strategy to produce deeper assessment and better mitigation strategies in other areas of Quantum Computing. This method and system also work to mitigate multi-photon errors in the presence of loss. This method and system can be modified to mitigate multi-photon errors even without losses. Bounds on parameters for large-sized experiments (where outcomes are unknown) can be estimated from learning on smaller-sized experiments (where outcomes are known). The present invention can be combined with a loss-mitigation method (Photon Recycling) to simultaneously mitigate losses. The present invention can be extended to mitigate boson sampling by using rejection sampling or by measuring marginals. The present invention can be applied to input states of light other than single-photon states (so long as they are diagonal in the partition basis). Any input can be forced to be diagonal in partition basis by averaging over all permutations of photons.

In the present description and appended claims "a", "an", "one", or "another" applied to "embodiment", "example", or "implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", may include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

Modifications and improvements to the above-described implementations of the present technology may become apparent to those skilled in the art. The foregoing description is intended to be exemplary rather than limiting. The scope of the present technology is, therefore, intended to be limited solely by the scope of the appended claims.

### References

- 10: Photon
- 20: Partition
- 100: Method for error mitigation
- 111: Generating partially distinguishable photons
- 120: Measuring phase
- 121: Measuring the probability distribution
- 122: Uniquely labeling each partially distinguishable photon
- 123: Estimating probability distributions
- 130: Processing phase
- 131: Combining all the probability distributions
- 200: System for error mitigation
- 210: Quantum information processing module
- 211: Photon generation sub-module
- 211a: Photon-source
- 212: Measuring sub-module
- 212a: Photon detector
- 220: Classical information processing module
- 230: Linear optical transformation device
- 240: Interferometer
- 250: Shutter Module
- 260: Classical computer
- 270: Time-delay loop device

## Claims

1. A method (100) for mitigating errors in photonic quantum information processing, said method (100) being configured to be implemented by at least one system (200), said method (100) comprising at least the following phases:
a. a production phase (110) comprising at least the following step:
• Generating (111), using at least one quantum information processing module (210) comprising at least one photon generation sub-module (211) comprising at least one photon-source (211a), partially distinguishable photons (10), preferably designed to be used for at least one computation;
b. a measuring phase (120) comprising at least the following steps, these following steps being configured to be executed in any order:
• Measuring (121), using said quantum information processing module (210) comprising a measuring sub-module (212) comprising at least one photon detector (212a), at least one computation result *R*(*̅p̅*̅) that is dependent on at least one probability distribution *̅p̅*̅ produced by *N* partially distinguishable photons (10) at an output of said quantum information processing module (210) where;
• *̅p̅*̅ denotes a collection of detection probabilities *pₙ* wherein each probability corresponds to the probability of observing a unique pattern of detection outcomes *n*;
• *n* denotes a list of integers indicating the number of photons (10) measured by at least said photon detector (212a) of said measuring sub-module (212);
• Uniquely labeling (122), using a classical processing information module (220), each partially distinguishable photon (10) of the *N* partially distinguishable photons (10) and considering one or more partitions (20) of the *N* photons (10), where;
• A partition (20) is denoted by Λ, and is written as a unique grouping of all photon labels;
• each partition (20) is composed of *m* groups of photons, and each group is called a cell denoted *c*;
• Estimating (123), using said quantum information processing module (210) or said classical information processing module (220), at least one probability distribution of *N - K* photons (10) at the output of the quantum information processing module (210), where a predetermined group of *K* photons (10) are deterministically separated at the input of the quantum information processing module (210), said estimating step comprising:
• Choosing at least one partition A (20) of the input photons (10) containing at least one cell *c*;
• For each chosen partition (20):
- Estimating the cell probability distribution *p̅_{c}* associated with at least one cell *c* by considering only the input photons (10) in said cell *c* of the chosen partition A (20).
c. a processing phase (130) comprising at least the following steps:
• Combining (131), by said classical information processing module (220), all the cell probability distributions *p̅_{c}* associated with the chosen partition Λ (20) to construct at least one partition computation result *R*(*̅p̅*̅_{Λ}) that approximates at least partially the noise impacting the computation result *R*(*̅p̅*̅), comprising, for each chosen partition:
• Computing, using the classical information processing module (220), the partition probability distribution *̅p̅*̅_{Λ} by performing a convolution between the cell probability distributions associated with each cell in the chosen partition Λ (20): *̅p̅*̅_{Λ} = *̅p̅*̅_{*c*₁} ★ *̅p̅*̅_{*c*₂} ★ ... ★ *p̅_{cₘ},* m being the number of cells of the chosen partition A (20);
• Correcting (132), by said classical information processing module (220), the computation result *R*(*̅p̅*̅) using at least one partition computation result *R*(*̅p̅*̅_{Λ}), comprising:
• Computing, by a weighted subtraction of at least one partition computation result *R*(*̅p̅*̅_{Λ}) from the computation result *R*(*̅p̅*̅), the error-mitigated computation result *R'* = *w*₀*R*(*̅p̅*̅) - ∑_{Λ} *w*_{Λ}*R*(*̅p̅*̅_{Λ}) where the correction weight *w*₀ and each partition correction weight *w*_{Λ} are predetermined real or complex values that form the error mitigation parameters.
d. An application phase (140) comprising the following step:
• using (141) the error-mitigated computation result *R'* in place of the computation result *R*(*̅p̅*̅) as the output of at least one photonic quantum information processing procedure.

2. The method (100) according to any one of the previous claims, wherein at least one photon of the predetermined group of *K* photons is separated and thus destroyed using at least one shutter module (250), said shutter module (250) comprising at least one shutter.

3. The method (100) according to claim 1, wherein at least one photon of the predetermined group of *K* photons is separated and configured to be measured using said quantum information processing module (210) or another quantum information processing module comprising a measuring sub-module (212) comprising at least one photon detector (212a).

4. The method (100) according to any one of the previous claims, wherein the generating step (111) of the production phase (110) comprises at least:
a. Generating at least one excitation pulse to excite the photon generation sub-module (211);
b. Producing a string of n photons by controlling the sequence of excitation pulses to produce periodically photons or not produce photons.

5. The method (100) according to any one of the previous claims, wherein the production phase (110) comprises a demultiplexing step to generate multiple strings of at least one photon (10), using at least one demultiplexing device configured to organize at least one string of photons (10) into multiple strings of photons (10), each string of photons (10) comprising at least one photon (10).

6. The method (100) according to any one of the previous claims wherein the combining (131) step comprises, for each chosen partition, after the computing step:
a. Convoluting two cell probability distributions *p̅_{c}* and *p̅_{c},* to give a partial partition probability distribution *̅p̅*̅_{cc}' = *p̅_{c}* * *p̅_{c}*' that is a collection of probabilities *p_{cc',n"}* = ∑_{*n,n*'}|_{*n*+*n'*=}*_{n"} p_{c,n}* × *p_{c',n'}*;

7. The method (100) according to any one of the previous claims wherein the production phase (110) comprises, before producing at least one photon (10), a step of controlling at least one of:
a. a laser using said classical information processing module (220); and/or
b. an electrical excitation component using said classical information processing module (220).

8. The method (100) according to any one of the previous claims, wherein the measuring step (121), using said quantum information processing module (210), comprises at least the following sub-steps:
a. applying a linear optical transformation on at least one said partially distinguishable photons using a linear optical transformation device (230) comprising at least one interferometer (240);
b. measuring the presence of photons at the output of said linear optical transformation device (230) using said detector module (212);
c. sending the output from said detector module (212) to said classical information processing module (220).

9. The method (100) according to the previous claim, comprising, using said linear optical transformation device (230):
- Generating interaction between photons wherein each photon comes from different strings; and/or
- Generating interaction between photons wherein each photon comes from the same string, preferably using at least one time-delayed loop device (270); and/or
Generating interaction between photons wherein each photon comes from the same string and/or from different strings using at least one quantum memory.

10. The method (100) according to any one of the previous claims, further comprising a calibration phase (150), this calibration phase comprising at least the following steps:
a. Performing simulation, using said classical information processing module (220), for calculating at least one theoretical reference computation result *R*_{ref}; and
b. Determining a value for at least one error mitigation parameter of the error mitigation parameters based on comparing the error-mitigated computation result *R'* to a theoretical reference computation result *R*_{ref}, using said classical information processing module (220).

11. The method (100) according to the previous claim, wherein the determining step of the calibration phase (150) comprises using machine learning techniques to determine at least one error mitigation parameter by:
o Considering the theoretical reference computation result *R*_{ref};
o Considering the error-mitigated computation result *R'* parametrized by said error mitigation parameters, preferably unfixed;
o Defining at least one cost function between said two computation results; and
o Minimizing said cost function to determine a value for each parameter of said error mitigation parameters.

12. A computer product program for error mitigation in photonic quantum information processing which, when executed by at least one computer-implemented system, executes the method (100) according to any one of the previous claims.

13. A non-volatile memory comprising at least one computer program product according to the previous claim.

14. A system (200) for error mitigation in photonic quantum information processing, comprising:
a. a quantum information processing module (210) comprising:
• a photon generation sub-module (211), said photon generation sub-module (211) comprising at least one photon-source (211a), said photon generation sub-module (211) being configured to generate partially distinguishable photons (10), preferably designed to be used for at least one computation;
• an output configured to deliver partially distinguishable photons (10);
• a measuring sub-module (212) comprising at least one photon detector (212a), said measuring sub-module (212) being configured to measure at least one computation result *R*(*̅p̅*̅) that is dependent on at least one the probability distribution *̅p̅*̅ produced by *N* partially distinguishable photons (10) at the output of said quantum information processing module (210);
The quantum information processing module (210) being configured to:
• estimate at least one probability distribution of *N - K* photons at the output of the quantum information processing module (210);
• Choose at least one partition Λ (20) of the input photons (10) containing at least one cell *c*;
• Estimate the probability distribution *p̅_{c}* associated with at least one cell *c* by considering only the input photons (10) in said cell *c* of the chosen partition Λ (20);
b. a classical information processing module (220), configured to:
• uniquely label each partially distinguishable photon (10) of the *N* partially distinguishable photons (10);
• estimate at least one probability distribution of *N - K* photons at the output of the quantum information processing module (210);
• Choose at least one partition Λ (20) of the input photons (10) containing at least one cell *c*;
• Estimate the cell probability distribution *p̅_{c}* associated with at least one cell *c* by considering only the input photons (10) in said cell *c* of the chosen partition A (20);
• combine all the cell probability distributions *p̅_{c}* associated with the chosen partition Λ (20) to construct at least one partition computation result *R*(*̅p̅*̅_{Λ}) that approximates at least partially the noise impacting the computation result *R*(*̅p̅*̅);
• compute the partition probability distribution *p̅_{Λ}* by performing a convolution between the cell probability distributions associated with each cell in the chosen partition: *̅p̅*̅_{Λ} = *̅p̅*̅_{*c*₁} ** p̅*_{*c*₂} *** ... * *p̅_{cₘ},* m being the number of cells of the chosen partition A (20);
• Preferably, convolute two probability distributions *p̅_{c}* and *p̅_{c'}* to give a new probability distribution *̅p̅*̅_{cc'} = *p̅_{c}* * *p̅_{c'}* that is a collection of probabilities *p_{cc',n"}* = ∑_{*n,n'*|}*_{n+n'=n"} Pc,n* × *p_{c',n'} ;*
• Correct a computation result *R*(*̅p̅*̅) using at least one partition computation result *R*(*̅p̅*̅Λ), by computing, by a weighted subtraction of at least one partition computation result *R*(*̅p̅*̅_{Λ}) from the computation result R(p), the error-mitigated computation result *R*' *= w*₀*R*(*̅p̅*̅) - ∑_{Λ} *w*_{Λ}*R*(*̅p̅*̅_{Λ}) where the correction weight *w*₀ and each partition correction weight *w*_{Λ} are predetermined real or complex values that form the error mitigation parameters.

15. The system (200) according to the previous claims, comprising at least one shutter module (250) configured to separate at least one of the predetermined group of *K* photons.
